# EUROPEAN PATENT APPLICATION

(11) **EP 4 239 754 A1**
(43) Date of publication of application: **06.09.2023**
(21) Application number: 21886356.1
(22) Date of filing: 28.10.2021
(51) Int. Cl.: H01M 10/42, H02J 7/00, B60L 58/18, B60L 53/80

(54) **START-UP DEVICE, POWER STORAGE DEVICE, AND POWER DEVICE**

(30) Priority: 28.10.2020 JP 2020180606
(71) Applicant: HONDA MOTOR CO., LTD., Minato-ku Tokyo 107-8556 (JP)
(72) Inventor: IWAMOTO, Jun, Wako-shi, Saitama 351-0193 (JP); TAKIZAWA, Daijiro, Wako-shi, Saitama 351-0193 (JP); YAGI, Keita, Wako-shi, Saitama 351-0193 (JP); FUJIHARA, Naoki, Wako-shi, Saitama 351-0193 (JP)
(74) Representative: Weickmann & Weickmann PartmbB
(86) International application number: PCT/JP2021/039915
(87) International publication number: WO 2022/092239

(57) **Abstract**

A start-up device is a start-up device of a power storage device having a power storage. The power storage device includes a switching controller configured to switch between a started-up state in which electric power of the power storage can be output to outside of the power storage device or in which electric power outside of the power storage device can be input to the power storage and a non-started-up state in which electric power of the power storage cannot be output to the outside of the power storage device and in which electric power outside of the power storage device cannot be input to the power storage. The start-up device includes a power source part provided outside of the power storage device and electrically connectable to the switching controller.

## Description

### [Technical Field]

The present invention relates to a start-up device, a power storage device, and a power device.

### [Background Art]

In recent years, a power storage device having a power storage has been used as an energy source for a various types of power devices such as a moving body, a portable terminal, or the like, including electric automobiles. In the power storage device, there are types that a non-started-up state in which electric power stored in the power storage is not output to the outside of the power storage device is shifted to a started-up state in which the electric power stored in the power storage can be output to the outside of the power storage device by providing a control signal of a predetermined voltage from the outside of the power storage device, and on the other hand, there are types that the non-started-up state is maintained until the control signal is provided from the outside of the power storage device (see Patent Document 1).

The power device of Patent Document 1 includes a control unit (ECU) configured to control conversion of electric power output from the power storage device, and a sub battery (lead battery) used as a power source for control. After the control unit is activated using the electric power of the sub battery, the same electric power is further used to implement control for putting the power storage device in a started-up state.

### [Citation List]

### [Patent Document]

[Patent Document 1]
PCT International Patent Publication No. 2018/147046

### [Summary of Invention]

### [Technical Problem]

However, whenever the power storage device switches from non-started-up state to the started-up state, enough electric power to start up the power storage device stably is requireduntil the power storage device starts up. In the method of Patent Document 1, in order to supply the electric power for switching the power storage device to the started-up state from the sub battery, a sub battery with a relatively large capacity may be required. Accordingly, convenience of the power device to which the power storage device was applied was sometimes reduced.

In consideration of the above-mentioned circumstances, the present invention is directed to providing a start-up device of a power storage device capable of increasing convenience of a power device to which the power storage device is applied, a power storage device, and a power device.

### [Solution to Problem]

The present invention disclosed in claim 1 is a start-up device (140, 147B, 147BB) of a power storage device (121) having a power storage (1211), the power storage device including a switching controller (1219, 1219S, 1219T) configured to switch between a started-up state in which electric power of the power storage is able to be output to outside of the power storage device or in which electric power outside of the power storage device is able to be input to the power storage and a non-started-up state in which electric power of the power storage is unable to be output to the outside of the power storage device or in which electric power outside of the power storage device is unable to be input to the power storage, and the start-up device including a power source part (147, 147A, 1471) provided outside of the power storage device and electrically connectable to the switching controller.

The power storage device according to the present invention disclosed in claim 2 is provided to be attachable to or detachable from a power device (1) including an operating part (130, 135), the power storage of the power storage device and the operating part are electrically connected via a first electric power transmission route (PL1), and the power source part and the switching controller are electrically connected via a second electric power transmission route (PL2).

The start-up device according to the present invention disclosed in claim 3 has a first external connecting portion (CN1, CN6b) to which a power source outside of the start-up device is connected, and the power source part and the first external connecting portion are electrically connected to each other.

In the start-up device according to the present invention disclosed in claim 4, the power source part is electrically connected to the first electric power transmission route via a third electric power transmission route (PL3). The third electric power transmission route is connected to the first external connecting portion.

In the start-up device according to the present invention disclosed in claim 5, the power device or the start-up device includes an electric power conversion part (146) on the third electric power transmission route.

In the power storage device according to the present invention disclosed in claim 6, among a pair of a first electric power connecting portion (121Pb) and a second electric power connecting portion that are placed in the first electric power transmission route and that are provided to be attachable to and detachable from each other, the power storage device includes the second electric power connecting portion (121P), and among a pair of a third electric power connecting portion (121Pab) and a fourth electric power connecting portion (121Pa) that are placed in the second electric power transmission route and that are provided to be attachable to and detachable from each other, the power storage device includes the fourth electric power connecting portion.

In the start-up device according to the present invention disclosed in claim 7, the second electric power connecting portion and the fourth electric power connecting portion are provided integrally.

The second electric power connecting portion and the fourth electric power connecting portion according to the present invention disclosed in claim 8 are provided independently.

The power storage device according to the present invention disclosed in claim 9 has a second external connecting portion (CN6b) to which a power source outside of the power storage device is connected, and a fourth electric power transmission route (PL4) configured to electrically connect the switching controller and the second external connecting portion, and the fourth electric power transmission route (PL4) is provided parallel to the second electric power transmission route.

The second external connecting portion according to the present invention disclosed in claim 10 is provided to be connectable to the start-up device (147BB).

The power device according to the present invention disclosed in claim 11 includes a first controller (140M) configured to control the operating part, and the start-up device (140) is disposed at a position near the first controller.

The first controller according to the present invention disclosed in claim 12 is connected to be communicable with a second controller (1212S, 1212T) via a communication route, the second controller being configured to control a connecting/disconnecting part of the power storage device via a communication route, and among a pair of a first communication connecting portion (121bb and 121cb) and a second communication connecting portion (121b and 121c) that are placed in the communication route and that are attachable to and detachable from each other, the power storage device includes the second communication connecting portions.

In the power storage device according to the present invention disclosed in claim 13, among a pair of a third electric power connecting portion (121ab) and a fourth electric power connecting portion (121a) that are placed in the second electric power transmission route and that are attachable to and detachable from each other, the power storage device includes the fourth electric power connecting portion, and the second communication connecting portion and the fourth electric power connecting portion are provided integrally.

The start-up device (99S) according to the present invention disclosed in claim 14 is provided to be attachable to and detachable from the power device (1G).

The start-up device according to the present invention disclosed in claim 15 is provided to be communicable with an input part (99) configured to receive an intention of start-up of the power device by a user of the power device or communicable with a control unit (160) configured to control the input part, and the start-up device is provided to supply electric power of the power source part to the outside of the start-up device on the basis of input information to the input part.

The start-up device according to the present invention disclosed in claim 16 is provided with an opening/closing part which is in series with the power source part, the opening/closing part (148B) being configured to switch whether electric power of the power source part is supplied to the outside of the start-up device.

The start-up device according to the present invention disclosed in claim 17 includes a storage (176) configured to store authentication information provided for authentication related to usage allowance of the power device.

The start-up device according to the present invention disclosed in claim 18 includes a second communication part (170) provided to be communicable with a first communication part (160) of the power device.

The second communication part according to the present invention disclosed in claim 19 is provided to transmit operation information provided for an operation of the power device or the authentication information.

The start-up device according to the present invention disclosed in claim 20 includes another power source part (173) different from the power source part (1471).

The power storage device according to the present invention disclosed in claim 21 includes a second electric power terminal (121P) that is an electric power terminal provided to be attachable to and detachable from a first electric power terminal (121Pb) that is an electric power terminal of a power device (1) provided to be attachable to and detachable from the power storage device, and the switching controller includes a connecting/disconnecting part (1213) that is provided on a first electric power transmission route (PL1) that connects the power storage and the second electric power terminal and that is configured to switch opening/closing of the electric power transmission route [electric circuit].

The connecting/disconnecting part according to the present invention disclosed in claim 22 includes a first connecting/disconnecting part (1213M) and a second connecting/disconnecting part (1213S) provided parallel to the first connecting/disconnecting part.

The switching controller according to the present invention disclosed in claim 23 includes a signal conversion part (1214) configured to change electric power of the power source part to a switching signal that switches an output state of the switching controller; and a connecting/disconnecting controller (1212S, 1212T) configured to control the connecting/disconnecting part according to detection of the switching signal, the connecting/disconnecting part includes a plurality of semiconductor switching elements (1213S, 1213M, 1213P), connecting/disconnecting of which is controlled by the control, and when the switching signal showing output allowance is not detected, the connecting/disconnecting controller performs control to put each of the plurality of semiconductor switching elements in a disconnection state and generates the non-started-up state of the power storage device, and when the switching signal showing the output allowance is detected, the connecting/disconnecting controller performs control to put each of the plurality of semiconductor switching elements in a conduction state and generates the started-up state of the power storage device.

The power source part according to the present invention disclosed in claim 24 is disposed on the power device including an electric power conversion part (130) configured to convert electric power, and the electric power conversion part converts electric power from the power storage device that has been started up, or transmits the converted and generated electric power to the power storage device that has been started up.

The start-up device according to the present invention disclosed in claim 25 includes an input terminal (140p) to which electric power from the power storage device is input; and an output terminal (140a) configured to output some of electric power output from the power source part.

The start-up device according to the present invention disclosed in claim 26 includes a voltage conversion part (146) that is disposed on a route from the input terminal to the output terminal and that is configured to supply electric power after converting a voltage of the input terminal to the power source part, and an allowance input voltage allowed with respect to the input terminal is different from an allowance output voltage allowed with respect to the output terminal.

The start-up device according to the present invention disclosed in claim 27 is provided to be attachable to and detachable from the power storage device.

The present invention disclosed in claim 28 is a power device including an operating part (130) configured to charge or discharge a power storage device (121) having a power storage (1211), the power storage device including a switching controller (1219, 1219S, 1219T) configured to switch between a started-up state in which electric power of the power storage is able to be output to outside of the power storage device or in which electric power outside of the power storage device is able to be input to the power storage and a non-started-up state in which electric power of the power storage is unable to be output to the outside of the power storage device or in which electric power outside of the power storage device is unable to be input to the power storage, and a start-up device (140) configured to start up the power storage device includes a power source part (147, 147A) provided outside of the power storage device and electrically connectable to the switching controller.

In the power device according to the present invention disclosed in claim 29, a first accommodating portion (120) and a second accommodating portion (80) configured to form an accommodating space that has an opening on an upper portion thereof are provided, the power storage device is accommodated in the first accommodating portion, and the start-up device is accommodated in the second accommodating portion.

The present invention disclosed in claim 30 is a power storage device (121) having a power storage (1211), including a switching controller (1219, 1219S, 1219T) configured to switch between a started-up state in which electric power of the power storage is able to be output to outside of the power storage device or in which electric power outside of the power storage device is able to be input to the power storage and a non-started-up state in which electric power of the power storage is unable to be output to the outside of the power storage device or in which electric power outside of the power storage device is unable to be input to the power storage; and a connecting portion (121a, CN6Ab) that is provided outside of the power storage device and to which a start-up device (140, 147A) having a power source part (147, 147A, 1471) electrically connectable to the switching controller is connected.

### [Advantageous Effects of Invention]

According to the present invention disclosed in claims 1 to 30, in a start-up device of a power storage device having a power storage, the power storage device includes a switching controller configured to switch between a started-up state in which electric power of the power storage can be output to the outside of the power storage device or in which electric power outside of the power storage device can be input to the power storage and a non-started-up state in which electric power of the power storage cannot be output to the outside of the power storage device or in which electric power outside of the power storage device can be input to the power storage, and the start-up device is a start-up device including a power source part provided outside of the power storage device and electrically connectable to the switching controller, thereby further increasing convenience of the power device to which the power storage device is applied.

### [Brief Description of Drawings]

FIG. 1 is a left side view of a saddle riding electric vehicle of a first embodiment.
FIG. 2 is a cross-sectional view of the saddle riding electric vehicle of FIG. 1.
FIG. 3A is a perspective view for describing an accommodating portion configured to accommodate a battery of the first embodiment.
FIG. 3B is a perspective view for describing the accommodating portion configured to accommodate the battery of the first embodiment.
FIG. 3C is a plan view for describing disposition of an ECU of the first embodiment.
FIG. 4 is a block diagram of a control system of a motorcycle of the first embodiment.
FIG. 5 is a schematic configuration view of the ECU of the first embodiment.
FIG. 6 is a schematic configuration view of a power source system of the first embodiment.
FIG. 7A is a flowchart of a sequence in a started-up state of the battery of the first embodiment.
FIG. 7B is a flowchart of processing of outputting an activating signal ACT of FIG. 7A.
FIG. 8 is a flowchart of a sequence in a non-started-up state of the battery of the first embodiment.
FIG. 9 is a view for describing a state shift of the battery of the first embodiment.
FIG. 10 is a block diagram of a motorcycle of a second embodiment.
FIG. 11 is a schematic configuration view of a start-up device of the second embodiment.
FIG. 12A is a schematic configuration view of a power source system of a fourth embodiment.
FIG. 12B is a view for describing the power source system shown in FIG. 12.
FIG. 12C is a flowchart of start-up processing of a battery of the fourth embodiment.
FIG. 12D is a flowchart of a start-up sequence of the battery applied to the fourth embodiment.
FIG. 13 is a schematic configuration view of a power source system of a first variant of the fourth embodiment.
FIG. 14 is a schematic configuration view of a power source system of a fifth embodiment.
FIG. 15 is a schematic configuration view of a power source system of a sixth embodiment.
FIG. 16 is a schematic configuration view of a power source system of a second variant of the sixth embodiment.
FIG. 17 is a schematic configuration view of a power source system of a seventh embodiment.
FIG. 18A is a schematic configuration view of a power source system of an eighth embodiment.
FIG. 18B is a front view of a key switch according to FIG. 18A.
FIG. 19 is a flowchart showing a sequence of processing upon start-up of a battery of the eighth embodiment.
FIG. 20 is a flowchart showing a sequence of processing of a portable machine of the eighth embodiment.

### [Description of Embodiments]

### (First embodiment)

Hereinafter, embodiments of the present invention will be described with reference to the accompanying drawings. Further, the drawings are views in directions of reference signs, and directions of left LH, forward FR and upward UP are directions as viewed by an occupant (user) during driving. A motorcycle of an embodiment is an example of a vehicle, a moving body, or a power device (electric power equipment). This will be described by taking the motorcycle as an example as a representative of these.

"XX is sufficiently charged" in the embodiment refers to a state in which a terminal voltage of XX exceeds a reference voltage at which it can be determined that electric power stored in XX can be used. "Electrically connectable to XX" in the embodiment includes both a contact type of connection of being connected to "XX" to receive a signal or electric power via a connecting connector, a terminal, a cable, a wiring pattern on a circuit board, or the like, and a non-contact type of connection of being electromagnetically connected to "XX" to receive a signal or electric power. The above-mentioned "electrically connectable" includes both supplying a signal or electric power to "XX" directly and supplying a signal or electric power to an electric circuit "YY" other than "XX" to cause the electric circuit "YY" to supply the signal or electric power to "XX" according to thereto.

"Attachable to/detachable from XX" or "attachable/detachable" in the embodiment means that a state of mechanical or electrical connection to "XX" via a connecting connector, a terminal, a cable, a wiring pattern on a circuit board, or the like is an attached state (mounted state), and the attached state can be relatively easily released using no tool or using a general tool such as a screwdriver or the like. The above-mentioned "attached state" to "XX" includes a case in which it is mechanically supported by an object "YY" different from "XX" when it is in the state of attachment to "XX."

Further, items with the same or similar functions may be designated by the same reference signs and description thereof will be omitted.

"A power storage device" shown in the embodiment is an example of a storage object that temporarily stores electric power that actuates a power device using electric power. For example, "the power storage device" is an example of an electric power storage object attachably/detachably mounted on a power device using electric power. In the embodiment, a power storage device attachably/detachably mounted on a moving body that moves using electric power is exemplified as "the power storage device." A case in which it is applied to a vehicle (saddle riding electric vehicle) as an example of the moving body will be mainly described. Further, some of the other application examples will also be described below.

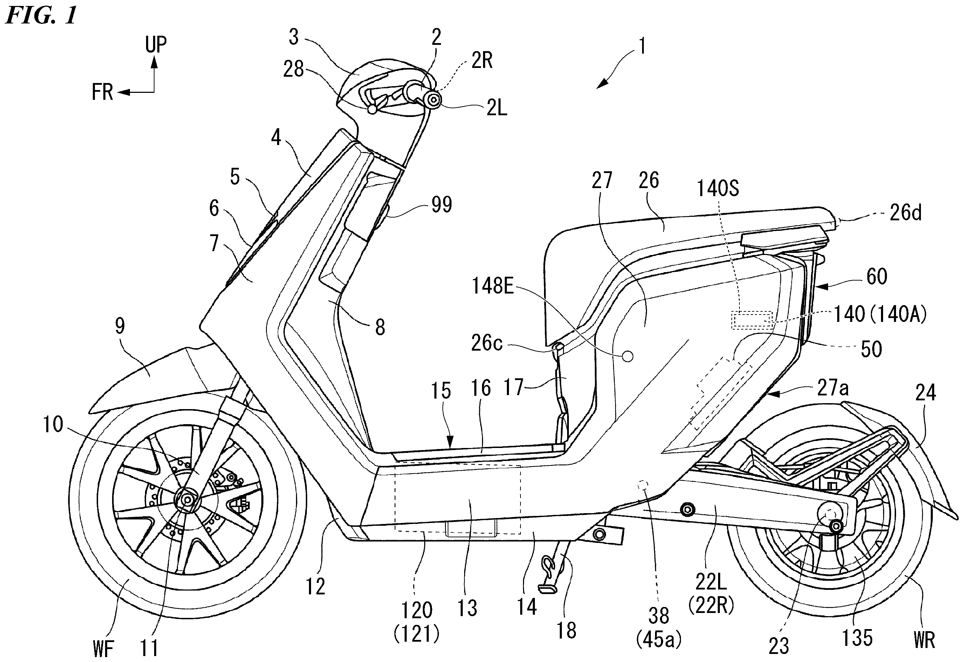

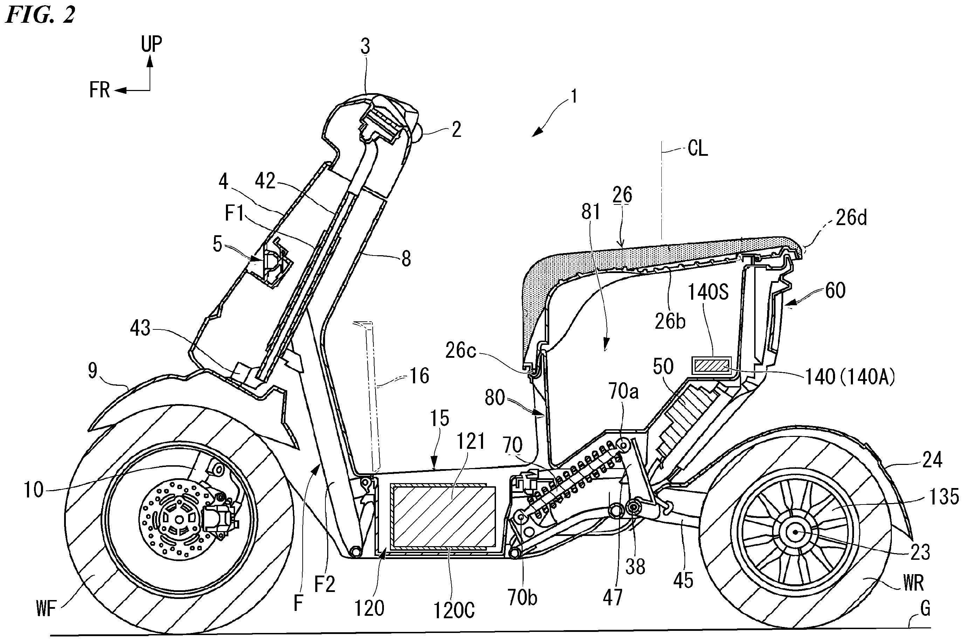

FIG. 1 is a left side view of a saddle riding electric vehicle of an embodiment. FIG. 1 shows an example of a scooter type saddle riding electric vehicle (hereinafter, referred to as "a motorcycle 1") having a bottom floor. The motorcycle 1 is a so-called starter type vehicle with a bottom floor 15 on which an occupant puts his/her legs between a steering handle 2 and a seat 26. The motorcycle 1 is an example of a vehicle in which each part in a vehicle body is disposed so as to increase a capacity of an accommodating box 80 (FIG. 2) provided in the vehicle body.

The motorcycle 1 is driven by power of an electric motor 135 provided on a rear wheel WR and travels. The electric power for driving the electric motor 135 is based on electric power (referred to as supplied electric power) supplied from a battery 121.

The steering handle 2 is covered with a meter cover 3. A throttle grip 2R is provided on a right side of the steering handle 2 in a vehicle width direction, and a front wheel brake lever is installed in front of the throttle grip 2R in the vehicle body. Meanwhile, a grip 2L is provided on a left side in the vehicle width direction, and a rear wheel brake lever 28 is installed in front of the grip 2L in the vehicle body.

A floor panel 8 is installed to face feet of an occupant sitting on the seat 26. A front cowl 7 is installed in front of the floor panel 8. A center panel 4 configured to support a headlight 5 and a combination light 6 is attached to the front cowl 7.

A front wheel WF steered by the steering handle 2 is rotatably supported by lower end portions of a pair of left and right front forks 10 about an axle 11. A front fender 9 configured to cover the front wheel WF from above is attached to the front forks 10. A front inner cover 12 configured to prevent intrusion of sand, water, or the like, swirling up by the front wheel WF is installed at a position behind the front wheel WF and inside the front cowl 7 in the vehicle width direction.

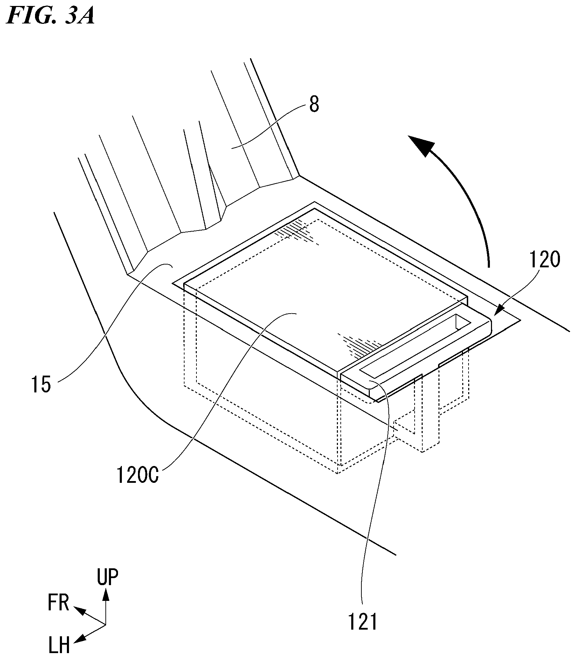

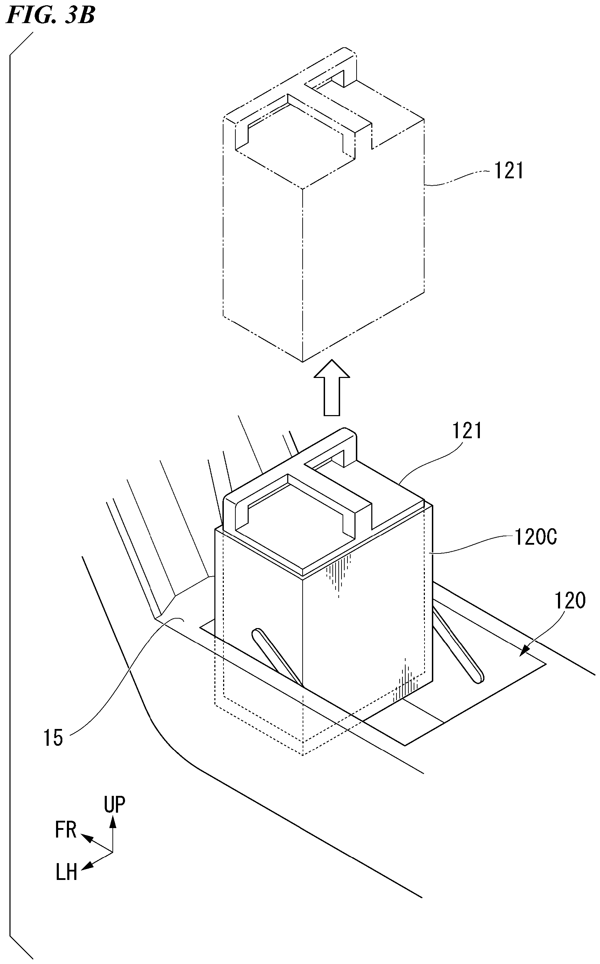

An accommodating portion 120 configured to accommodate the battery 121 is provided in a lower portion of the bottom floor 15. A front side of the accommodating portion 120 is covered with a pair of left and right side covers 13, and a lower side of the accommodating portion 120 is covered with an undercover 14. An upper end portion of the accommodating portion 120 is open and formed to enable attachment or detachment of the battery 121 (see FIG. 3A and FIG. 3B). The opening of the upper end portion of the accommodating portion 120 is covered with an opening/closing type lid member 16. The upper surface of the lid member 16 forms at least a part of the bottom floor 15. Rear end portions of the pair of left and right side covers 13 are formed to be connected to a pair of rear cowls 27 corresponding thereto. A seat lower panel 17 configured to connect front end portions of the left and right rear cowls 27 is installed therebetween.

An external start-up switch 148E that can be operated from the outside is disposed in the left rear cowl 27. The external start-up switch 148E is a push button type switch (momentary type switch), and detects a state in which an operation part (knob) is pushed. For example, the operation part of the external start-up switch 148E is covered with a flexible lid member formed not to protrude from a surface of the rear cowls 27 and protected such that water cannot intrude from the outside. An occupant can activates the battery 121 in a non-started-up state to use or deactivates the battery 121 in a started-up state not be used by pushing a lid member configured to cover the operation part of the external start-up switch 148E.

In the above-mentioned case, a position where the external start-up switch 148E is disposed is the side of the vehicle body. An occupant sits on the seat 26 and makes the motorcycle 1 travel while looking ahead of the vehicle. Therefore, the position where the external start-up switch 148E is disposed is out of sight of the occupant during traveling. In addition, the position of the external start-up switch 148E is determined within a range that is not easily operated during traveling. In addition, further, the motorcycle 1 is controlled not to be operated even when the external start-up switch 148E is operated while traveling.

The accommodating box 80 (see FIG. 2) is provided on a lower portion of the seat 26. The seat 26 is pivotable with the front side of the vehicle body as a shaft (a shaft 26c) such that a rear portion of the seat 26 is flipped up. The seat 26 operates also as a lid configured to cover an upper opening of the accommodating box 80. The seat 26 is disposed such that a surface of the seat 26 on the front side of the vehicle body is disposed behind the rear end portion of the accommodating portion 120 of the vehicle body. In addition, taillights 60 are disposed on rear end portions of the rear cowls 27.

For example, the electric motor 135 is disposed such that an axle 23 of the rear wheel WR is coaxial with an output shaft of the electric motor 135. Swing arm covers 22L and 22R are attached to left and right side surfaces of a swing arm 45 (see FIG. 2) that rotatably axially supports the rear wheel WR, respectively, and a rear fender 24 is fixed to an upper portion of the swing arm 45. The swing arm 45 swings around a swing arm pivot 38. A side stand 18 is swingably attached to the front of the swing arm pivot 38.

Rear edges 27a of the rear cowls 27 are inclined reward when seen in a side view of the vehicle body. A power control unit (PCU) 50 configured to control electric power supplied to the electric motor 135 is disposed to be inclined rearward of the vehicle body along the rear edges 27a. The PCU 50 is disposed outside of the accommodating box 80 to be surrounded by the left and right rear cowls 27 and the rear edges 27a.

For example, the PCU 50 is disposed at a position behind the swing arm pivot 38 provided on a front end of the swing arm 45 and overlapping a front end portion of the rear wheel WR. An electric power cable configured to supply electric power from the PCU 50 to the electric motor 135 is laid to protect the rear cowls 27, the swing arm cover 22L, and the like.

A key switch knob 99 (a key switch) on a right side in a vehicle width direction is disposed on the floor panel 8. For example, the key switch knob 99 is rotatably supported about a shaft perpendicular to a surface of the key switch, and the key switch is configured to be set to LOCK, OFF and ON by being operated.

Further, an anti-theft security system, a connecting terminal of USB equipment, or the like, can be provided in the vicinity of the floor panel 8. The anti-theft security system is, for example, a device configured to allow an operation of the motorcycle 1 in response to the operation of a remote control key (not shown) configured to transmit specified identification information in a wireless manner by receiving predetermined identification information from the remote control key.

A meter device configured to display a vehicle speed, a battery remaining capacity, or the like, is disposed at a center of the meter cover 3 in the vehicle width direction. A dimmer switch configured to switch an optical axis of the headlight 5, a turn signal lever, a horn switch, and the like, are disposed on the left side of the meter cover 3 in the vehicle width direction, and a mode changeover switch configured to switch power properties, a shut-down switch of electronic sound that informs the vehicle of approach of a pedestrian or the like, and the like, are disposed on the right side in the vehicle width direction. These electric components are operated in a duration that the battery 121 is in a started-up state.

FIG. 2 is a cross-sectional view of a saddle riding electric vehicle of FIG. 1. A cross section shown in FIG. 2 includes a center axis of the vehicle body extending in a vehicle body forward/rearward direction of the motorcycle 1. A steering stem 42 rotatably axially supported by a head pipe F1 of a vehicle body frame F and a bottom bridge 43 configured to support the pair of left and right front forks 10 are provided on a lower end portion of the steering handle 2.

A main frame F2 extending rearward and downward from the vehicle body is connected to a rear surface of the head pipe F1. The main frame F2 is formed to support a battery box 120 and the swing arm 45.

The battery 121 is accommodated in a battery case 120C disposed in the accommodating portion 120 of the lower portion of the bottom floor 15. A state shown in FIG. 2 is a state (see FIG. 3A) in which the lid member 16 configured to cover the battery 121 and the battery case 120C from above is open. The lid member 16 can be removed from the vehicle body. Further, charging of the battery 121 is performed using a dedicated charger after the battery 121 is removed from the vehicle body. The dedicated charger is an example of a power device having a configuration capable of charging of the battery 121 through electrical connection thereof and mechanical coupling. When the dedicated charger performs charging of the battery 121, as in the embodiment, desired charging is performed after the battery 121 is changed from the non-started-up state to the started-up state.

The swing arm 45 is formed in a cantilever type in which a rear cushion 70 is pushed by an arm section 47 extending upward from the swing arm pivot 38. A shaft support section 70a of the rear cushion 70 on the rear side of the vehicle body is disposed at an upper end of the arm section 47, and a shaft support section 70b of the rear cushion 70 on the front side of the vehicle body is disposed on the side of the vehicle body frame F. The rear cushion 70 is swingably supported around each shaft of the shaft support section 70a and the shaft support section 70b. Accordingly, the rear cushion 70 is disposed between the battery 121 and the PCU 50.

A seat catch mechanism 26d configured to hold the opening/closing type seat 26 in a closed state is disposed above the taillight 60. Holding of the closed state of the seat 26 can be released by operating the seat catch mechanism 26d.

As described above, the accommodating box 80 is disposed below the seat 26 and above the rear cushion 70 and the PCU 50. The accommodating box 80 is formed such that a top-to-bottom dimension on the front side of the vehicle body is smaller than a top-to-bottom dimension on the rear side of the vehicle body. An accommodating space 81 by the accommodating box 80 is a space surrounded by an outer circumferential wall of the accommodating box 80 and a seat bottom plate 26b.

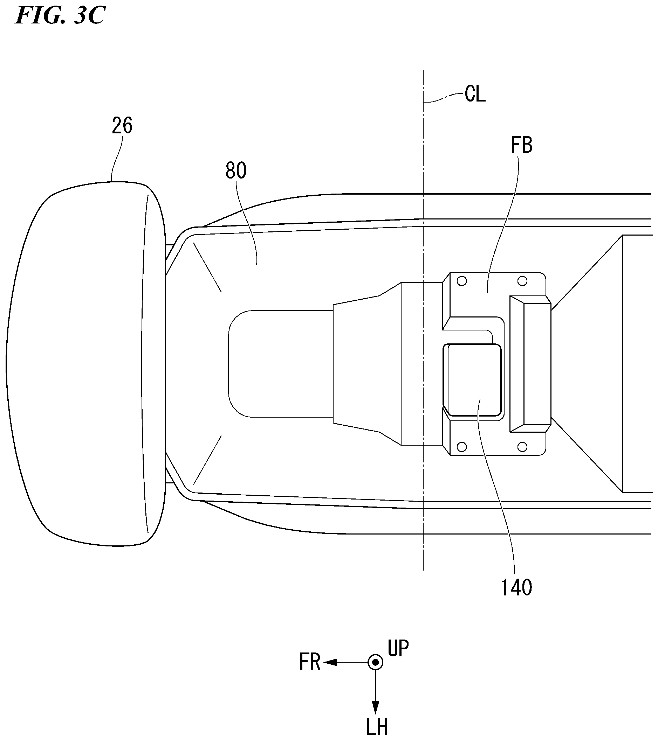

A start-up device arrangement section 140S in which a start-up device 140 is disposed is provided at a position in the accommodating box 80 near the rear of the vehicle. For example, the start-up device 140 is formed as a unit separated from the vehicle body. "Separated from the vehicle body" means that it is attached to the start-up device arrangement section 140S of the vehicle body in an easily attachable/detachable state or it can be retrofitted to the start-up device arrangement section 140S of the vehicle body. As shown in FIG. 3C, for example, the start-up device arrangement section 140S may be provided in the vicinity of a fuse box FB in which a fuse, which is a part of electric components, is accommodated or provided in the fuse box FB.

FIG. 3A and FIG. 3B are perspective views for describing the accommodating portion 120 configured to accommodate the battery 121 of the embodiment. FIG. 3A shows a state in which the lid member 16 is removed from the vehicle body. The battery 121 is disposed in a state being accommodated in the accommodating portion 120 (first accommodating portion).

For example, the battery 121 has a lower end portion on which a connector is disposed and an upper end portion on which a handle is provided. The battery 121 is formed in a substantially rectangular parallelepiped shape in which a height from the lower end portion to the upper end portion is greater than a width thereof. Here, the battery 121 is accommodated in the accommodating portion 120 in a laid down state to suppress the height of the bottom floor 15.

FIG. 3B shows a state in which the battery 121 stands in order to attach/detach the battery 121. The battery 121 is disposed in the battery case 120C.

For example, the battery 121 is accommodated in the accommodating portion 120 in a state being received in the battery case 120C provided on the side of the vehicle body. A stay is provided in the accommodating portion 120, and a shaft section configured to rotatably support the battery case 120C about a rotary shaft in the leftward/rightward direction of the vehicle body is provided on the stay. The battery case 120C is formed to be pivotable about the shaft section. For example, when the battery 121 is mounted, the battery 121 is moved in a downward direction to be received in the battery case 120C in a state in which the opening section of the battery case 120C is directed upward. When the battery 121 is removed, the battery 121 is moved in an upward direction to be received in the battery case 120C in a state in which the opening section of the battery case 120C is directed upward. When the battery 121 is accommodated in the accommodating portion 120, the opening section of the battery case 120C is disposed in a state being directed rearward from the vehicle body.

FIG. 3C is a plan view for describing disposition of the start-up device 140 of the embodiment. The plan view shown in FIG. 3C shows a situation in which the inside of the accommodating box 80 (second accommodating portion) is seen from the side of the opening (an upper side of the vehicle body) in a plan view in a state in which the seat 26 is opened and stood on the FR side in front of the vehicle body. A state in which the fuse box FB is disposed behind the vehicle body in the accommodating box 80 and the start-up device 140 is disposed outside of the fuse box FB is shown. The appearance of the start-up device 140 can be seen in a state in which the lid of the fuse box FB is not removed. For example, when the accommodating box 80 is divided into a front side and a rear side at a center of the opening of the accommodating box 80 in the forward/rearward direction with reference to a direction of advance of the motorcycle 1 (moving body), the start-up device 140 is provided on the rear side. An LED configured to display a control state of the start-up device 140 is provided on the start-up device 140 at a position that can be seen from above, and display of the LED can be checked by opening the seat 26.

The motorcycle 1 travels by driving the electric motor 135 using electric power supplied from a power device unit (PDU) 130 in the PCU 50 via an electric circuit 110 from the battery 121 and transmitting the rotating power to the rear wheel WR when the electric motor 135 is driven.

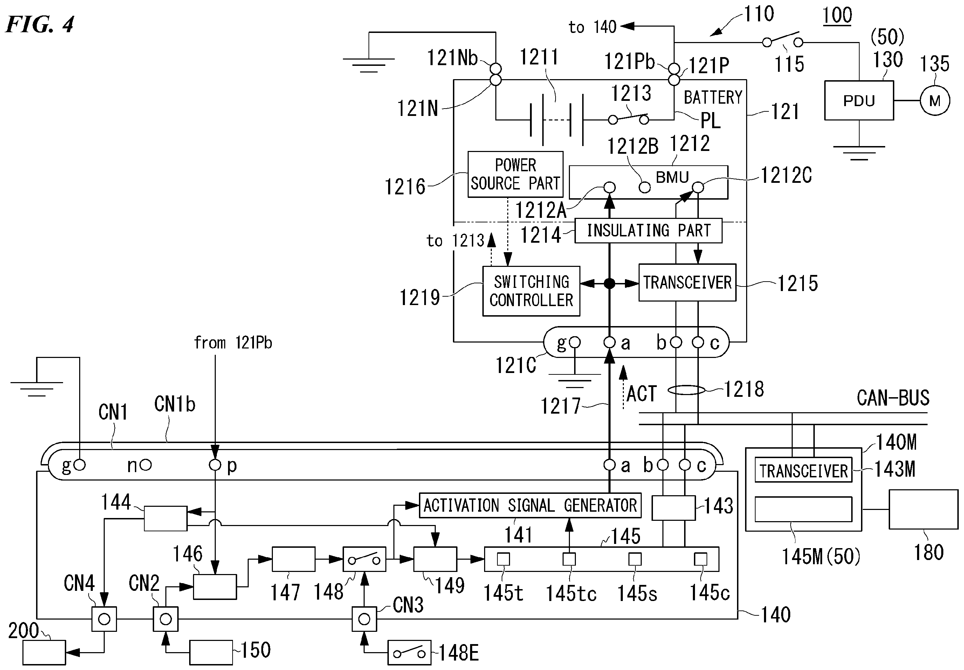

The battery 121 of the embodiment may be formed as one battery unit or divided into a plurality of battery units. In the following description, while a case in which one battery 121 is applied is exemplified, there is no limitation thereto. For example, a state of the mounted battery 121 is managed by a BMU 1212 (FIG. 4) disposed in the battery 121.

FIG. 4 is a block diagram of a control system 100 of the motorcycle 1 of the embodiment.

The control system 100 includes the electric circuit 110, the battery 121, the PDU 130 (load), the start-up device 140, and a main control unit (MCU) 140M.

The electric circuit 110 electrically connects the battery 121 (power storage device) to the PCU 50 including a contactor 115 and the PDU 130. In the connection shown in FIG. 4, a case in which the battery 121, the contactor 115, and the PDU 130 are connected in series is shown. Further, a combination of the PDU 130 and the MCU 140M is an example of the above-mentioned PCU 50. For example, traveling of the motorcycle 1 is controlled by the MCU 140M or the like.

For example, the electric circuit 110 includes a CAN-BUS (communication line) pursuant to CAN communication standard used propagation of a control signal or the like. At least the battery 121, the start-up device 140 and the MCU 140M are connected to the CAN-BUS, and communicate with each other via the CAN-BUS. For example, a signal transmitted from the start-up device 140 is propagated to each of the devices such as the battery 121, the MCU 140M, and the like, that can receive the signal via the CAN-BUS. The start-up device 140 observes a communication state via the CAN-BUS on the basis of existence of a response from each of the devices. Further, connection of the electric circuit 110 is not limited thereto but may be another connection type.

The battery 121 is an example of a power storage device. The battery 121 has a plurality of secondary battery type single battery cells such as a lithium ion battery, a nickel hydride battery, a lead battery, or the like. When the plurality of single battery cells are connected and locked to each other in series, the battery 121 generates a voltage pursuant to a nominal voltage thereof. For example, as the nominal voltage, a voltage such as 48 V, 96 V, or the like, that is higher than a voltage (for example, 12 V) of the battery provided to start a prime mover in a prime mover type vehicle to reduce driving current of the electric motor 135 may be selected. Further, it is not limited thereto and an arbitrary voltage may be selected. The electric power from the battery 121 is supplied to the PDU 130 configured to control output of the electric motor 135 via the electric circuit 110, and for example, after conversion from direct current to three-phase alternating current by the PDU 130, supplied to the electric motor 135 that is a three-phase alternating current motor. The PDU 130 is a so-called inverter. The PDU 130 charges or discharges the battery 121 having a battery main body 1211.

Further, an output voltage of the battery 121 is dropped to a low voltage (for example, 12V) by a DC/DC converter (not shown) and supplied to control system parts such as the MCU 140M or the like. In addition, the electric power with a low voltage dropped by the DC/DC converter is partially supplied to general electric parts including the headlight 5, the combination light 6, the taillight 60, and the like. Further, the output of the DC/DC converter may not be connected to the input of the start-up device 140. In this case, the output voltage is supplied to the start-up device 140 from the battery 121 in the started-up state. Further, the motorcycle 1 of the embodiment may be configured without a battery directly connected to a low voltage circuit corresponding to a power source voltage of the MCU 140M and configured to convert the low voltage into a rated voltage.

The battery 121 is previously charged by, for example, a charger (not shown) or the like using AC 100 V as a power supply. The battery 121 after charging is mounted on the motorcycle 1.

The battery 121 of the embodiment includes a battery main body 1211 (power storage), a battery managing unit (BMU) 1212, a bidirectional switch 1213 (opening/closing part, connecting/disconnecting part), an insulating part 1214, a CAN-BUS transceiver 1215 (hereinafter, referred to as the transceiver 1215), a battery power source part 1216 (hereinafter, simply referred to as the power source part 1216), a switching controller 1219, a high potential-side terminal 121P, a low potential-side terminal 121N, and a connector 121C.

The battery main body 1211 forms a secondary battery with a plurality of cells connected in series.

The bidirectional switch 1213 is provided on the battery main body 1211 in series, and a conduction state thereof is determined under control of the switching controller 1219, which will be described below. The bidirectional switch 1213 is provided on an electric power transmission route PL configured to connect the battery main body 1211 and the high potential-side terminal 121P (second electric power terminal), and switches opening/closing of the electric circuit that forms the electric power transmission route PL.

The BMU 1212 detects a state of the battery main body 1211, and informs the start-up device 140 of the detected state or the like. For example, the BMU 1212 includes a battery control unit 1212B and a communication controller 1212C. The battery control unit 1212B detects, for example, a change of a state (a voltage, a SoC, or the like) of each of the cells of the battery main body 1211, and adjusts the charged state of each cell to be uniform. The communication controller 1212C communicates with the start-up device 140 according to a predetermined protocol. For example, the communication controller 1212C communicates information for controlling charge/discharge of the battery 121 with the start-up device 140. Further, the BMU 1212 may be provided with an active signal detector 1212A configured to detect an activating signal ACT. The active signal detector 1212A detects, for example, a state of the activating signal ACT. The activating signal ACT is an example of the start-up signal.

The insulating part 1214 is constituted by a light coupler or the like, and electrically insulates the side of the BMU 1212 and the side of the connector 121C with respect to the signal between the BMU 1212 and the connector 121C. For example, the insulating part 1214 electrically insulates and converts the activating signal ACT supplied from a terminal a of the connector 121C toward the BMU 1212, and supplies the signal to the BMU 1212. Further, the terminal a of the connector 121C connected to the insulating part 1214 is connected to the start-up device 140 via an activating line 1217. In addition, the insulating part 1214 is provided between the BMU 1212 and the transceiver 1215, and electrically insulates and converts the signal between the BMU 1212 and the transceiver 1215.

The transceiver 1215 converts a signal used for communication between the BMU 1212 and the start-up device 140 and relays the signal in both directions. For example, the start-up device 140 and the battery 121 communicate with each other via the CAN-BUS according to the CAN standard. The transceiver 1215 in this case is provided with respect to the insulating part 1214 on the side of the connector 121C. A terminal b and a terminal c of the connector 121C connected to the transceiver 1215 are connected to the CAN-BUS via a CAN communication line 1218. The transceiver 1215 satisfies electrical connection conditions (physical conditions of the CAN standard) of the CAN-BUS.

The power source part 1216 receives electric power from the battery main body 1211 and supplies some of the electric power to the BMU 1212, the insulating part 1214, or the like, when the battery 121 is in the started-up state. For example, the power source part 1216 is provided on the side closer to the battery main body 1211 with respect to the insulating part 1214 and is electrically insulated from the side of the connector 121C.

As described above, the battery managing unit (the BMU 1212) functioned by the electric power of the battery 121 and the transceiver 1215 are electrically insulated from each other by the insulating part 1214.

The switching controller 1219 detects the activating signal ACT indicating significance from the start-up device 140, and controls the state of the bidirectional switch 1213 using the electric power supplied as the activating signal ACT. The switching controller 1219 receives electric power from the side of the connector 121C. The switching controller 1219 switches the control of the bidirectional switch 1213 on the basis of the output state (output voltage) of the power source part 1216. For example, the switching controller 1219 indirectly detects a state in which the power source part 1216 does not output the electric power (voltage) exceeding the predetermined value, i.e., a non-started-up state of the battery 121 by detecting the output voltage of the power source part 1216. When the activating signal ACT is detected, the switching controller 1219 shifts the state of the bidirectional switch 1213 to an ON state. When the activating signal ACT is detected in a state in which the power source part 1216 outputs the electric power (voltage) exceeding the predetermined value, i.e., the started-up state of the battery 121, the switching controller 1219 shifts the state of the bidirectional switch 1213 to an OFF state. The switching controller 1219 includes a delay circuit (timer circuit) configured to delay a response until a state shift of the bidirectional switch 1213 is executed from detection of the activating signal ACT.

Further, a set of the switching controller 1219 and the bidirectional switch 1213 may be configured using relays electrically insulated from each other. For example, the switching controller 1219 may include the bidirectional switch 1213. Control of the bidirectional switch 1213 by the switching controller 1219 will be described below in detail.

The high potential-side terminal 121P is a positive electrode of the battery 121. The low potential-side terminal 121N is a negative electrode of the battery 121. When the bidirectional switch 1213 is in a conduction state, a desired voltage is generated between the high potential-side terminal 121P and the low potential-side terminal 121N.

The connector 121C includes a plurality of signal terminals configured to receive a signal to control the battery 121. For example, the signal received via the connector 121C includes the activating signal ACT for activating the battery 121, and a signal for causing the BMU 1212 to communicate with the start-up device 140. The connector 121C includes a ground terminal or the like, in addition to terminals for these signals. The connector 121C is an example when the electrical signal is received, and is not limited thereto and may be changed as appropriate.

A situation of charge/discharge of the battery 121, a power storage amount of the battery main body 1211, a temperature, the activating signal ACT, and the like, are observed by the BMU 1212, and the observed results are shared with the start-up device 140, which will be described below, through communication. The BMU 1212 may limit the charge/discharge of the battery main body 1211 or the like by controlling the bidirectional switch 1213 or the like according to a control instruction from the start-up device 140 or the observed results.

The contactor 115 is provided between the high potential-side terminal 121P of the battery 121 and the PDU 130. The contactor 115 disconnects electrical connection between the high potential-side terminal 121P of the battery 121 and the PDU 130. The contactor 115 connects the battery 121 to the PDU 130 in a conduction state and releases the connection in a disconnection state.

The MCU 140M includes a CAN-BUS transceiver 143M (hereinafter, referred to as the transceiver 143M), and a managing unit 145M. For example, information of an output demand from a throttle (acceleration) sensor 180 is input to the MCU 140M. The managing unit 145M controls the contactor 115, the PDU 130, and the like, on the basis of the information of the output demand input to the MCU 140M. The MCU 140M is operated by the electric power from the battery 121 in the started-up state, and the function is stopped when the battery 121 is in the non-started-up state.

The MCU 140M limits supply of the electric power from the battery 121 by controlling the contactor 115. The MCU 140M controls driving of the electric motor 135 by controlling the electric power supplied to the electric motor 135 by the PDU 130.

The start-up device 140 is a start-up device configured to start up the battery 121 in a breakdown state. The start-up device 140 is configured as a unit (printed circuit board) 140PB on which, for example, connectors CN1 to CN4, and electric circuit parts are mounted.

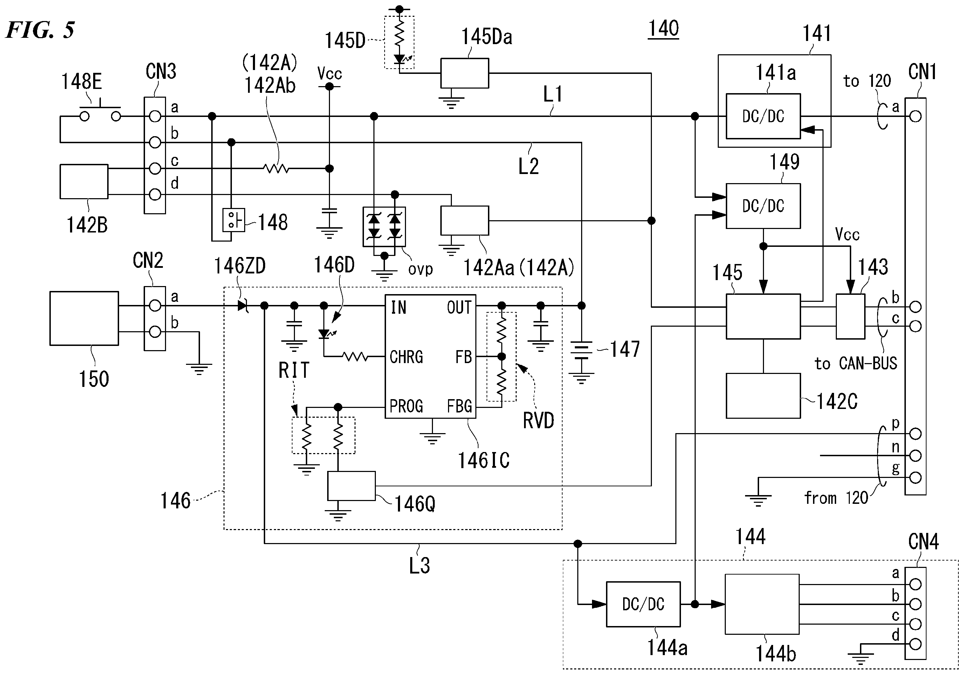

Further, referring to FIG. 5, a configuration example of the start-up device 140 of the embodiment will be described. FIG. 5 is a schematic configuration view of the start-up device 140 of the embodiment.

For each terminal of the connector CN1, a connection destination of the motorcycle 1 to the side of the main body will be described.

The connector CN1 includes terminals a to c, p, n, and g. The terminals a to c, p, n, and g of the connector CN1 are referred to as terminals 140a to 140c, 140p, 140n, and 140g, respectively. The connector CN1 is connected to a main body-side connector CN1b corresponding thereto. The main body-side connector CN1b has a terminal corresponding to each terminal of the connector CN1. In the following description, each terminal of the connector CN1 will be described as a representative.

The terminal 140a (output terminal) is connected to the terminal a in the connector 121C of the battery 121 via the activating line 1217. The terminals 140b and 140c are connected to the CAN-BUS outside of the start-up device 140. The terminal 140p is a power source terminal (electric power terminal). For example, the terminal 140p (input terminal) is connected to a terminal 121Pb (first electric power terminal) corresponding to a terminal 121P (second electric power terminal) on the side of the positive electrode of the battery 121. The terminal 140g is connected to a common potential pole (a low potential-side terminal 121Nb). In the embodiment, a potential of the battery 121 on the side of the negative electrode is a reference potential. The terminal 140g is connected to the low potential-side terminal 121Nb corresponding to the low potential-side terminal 121N of the battery 121 on the side of the negative electrode. Further, the terminal 140n in the embodiment is a spare terminal.

The connector CN2 includes a pair of terminals to which a charging device 150 or the like is connected. For example, the charging device 150 connected to the connector CN2 supplies the electric power to the start-up device 140 to start up the battery 121. Further, the charging device 150 converts direct current electric power supplied from the outside of the charging device 150 and charges a secondary battery 147.

The connector CN3 includes the terminals a and b to which the external start-up switch 148E is connected, and the terminals c and d to which a notifying part 142B is connected. An over-voltage protection circuit OVP configured to limit an over-voltage is provided on wirings L1 and L2 connected to the terminals a and c of the connector CN3.

An external device 200 is connected to the connector CN4. The connector CN4 includes the terminals a to d. For example, the connector CN4 is formed in a shape pursuant to the USB standard. For example, the external device 200 connected to the connector CN4 is charged using the electric power of the battery 121 in the activated state. The start-up device 140 discharges the electric power of the battery 121 via the connector CN4. Further, when the external device 200 for discharge is not connected to the start-up device 140, mounting of the connector CN4 on the unit 140PB may be omitted.

For example, the start-up device 140 (electric power conversion part) includes an activating signal generator 141, an output part 142A, notifying parts 142B and 142C, a CAN-BUS transceiver 143 (hereinafter, referred to as the transceiver 143), a discharging part 144, a managing unit 145, a DC/DC conversion part 146, the secondary battery 147 (power source part), a switch 148, and an DC/DC conversion part 149.

The activating signal generator 141 generates an activating signal ACT in order to set a state in which the battery 121 is usable. The output of the activating signal generator 141 is connected to the terminal 140a, and the activating signal generator 141 outputs the activating signal ACT to the terminal 140a. The activating signal generator 141 supplies the activating signal ACT to the battery 121 via the activating line 1217 (FIG. 4). Accordingly, the activating signal generator 141 can control the started-up state of the battery 121.

For example, the activating signal generator 141 includes a DC/DC conversion part 141a. When the input voltage is within a rated input voltage range, the DC/DC conversion part 141a outputs a predetermined direct current voltage according to this. The predetermined direct current voltage corresponds to a direct current voltage showing significance of the activating signal ACT. The activating signal generator 141 outputs the direct current voltage generated by the DC/DC conversion part 141a, and thus, it is output that the activating signal ACT is in a significant state.

The input of the activating signal generator 141 is connected to the terminal a of the connector CN3 via the wiring L1. Since the external start-up switch 148E is connected to the connector CN3, the input of the activating signal generator 141 is connected to a first electrode of the external start-up switch 148E via the terminal a of the connector CN3. A second electrode of the external start-up switch 148E is connected to a positive electrode of the secondary battery 147, which will be described below, via the terminal b of the connector CN3 and the wiring L2. The activating signal generator 141 controls the started-up state of the battery 121 by outputting the terminal voltage of the secondary battery 147 as the activating signal ACT according to the operation of the external start-up switch 148E of the occupant.

The output part 142A drives the notifying part 142B that is a load circuit provided outside of the start-up device 140 according to the control from the managing unit 145. The output part 142A includes an emitter ground type buffer circuit (an inverter circuit of one stage of a transistor) 142a and a resistor 142b. The LED and the chime are examples of the notifying part 142B, and connected to the start-up device 140 via the connector CN3. Further, instead of the notifying part 142B provided outside of the start-up device 140, the notifying part 142C may be provided inside the start-up device 140. The notifying part 142C is an example of the notifying part included in the start-up device 140.

An LED 145D is provided on the start-up device 140, and driven by a buffer circuit 145Da according to the control from the managing unit 145. The buffer circuit 145Da has the same configuration as the transistor circuit 142a.

The transceiver 143 converts a signal using communication or the like between the BMU 1212 and the start-up device 140 and relays it in both directions. For example, the start-up device 140 and the battery 121 communicate with each other via the CAN-BUS according to the CAN standard. The transceiver 143 in this case satisfies electrical connection conditions (physical conditions of CAN standard) between the CAN-BUS and the transceiver 143. The transceiver 143 uses the direct current voltage generated by the DC/DC conversion part 149, which will be described below, as the power source. For this reason, the transceiver 143 is activated in a duration in which the DC/DC conversion part 149 outputs the predetermined voltage, and enables communication via the CAN-BUS.

The discharging part 144 consumes and discharges the electric power stored in the activated battery 121. The discharging part 144 includes, for example, a DC/DC conversion part 144a and a setting unit 144b. The input of the DC/DC conversion part 144a is connected to a terminal p (input terminal) of the connector CN1. The output of the DC/DC conversion part 144a is connected to a second input of the DC/DC conversion part 149 and the setting unit 144b. The DC/DC conversion part 144a generates direct current electric power of the voltage to charge the secondary battery 147, which will be described below, and outputs the direct current electric power from the output terminal, on the basis of the direct current electric power supplied from the battery 121. Further, the voltage output by the DC/DC conversion part 144a may be determined to correspond to the voltage output from the terminal a of the connector CN4. For example, the voltage may be pursuant to the voltage defined by the USB standard.

The plurality of outputs of the setting unit 144b are connected to the terminal b and the terminal c of the connector CN4. The setting unit 144b outputs the voltage according to the setting to the terminal b and the terminal c of the connector CN4. The setting in the setting unit 144b may be determined according to a type of a device connected to the connector CN4.

The managing unit 145 includes, for example, a communication processor 145c, a state detector 145s, a clocking part 145t, and a controller 145tc (see FIG. 4).

Further, managing unit 145 is, for example, a semiconductor device including a processor such as a CPU or the like. The semiconductor device is configured to use the DC/DC conversion part 149 as the power source, and the DC/DC conversion part 149 is activated in a duration in which a predetermined voltage is output. When the processor executes a predetermined program, some or all of function units such as the communication processor 145c, the state detector 145s, the clocking part 145t, the controller 145tc, and the like, may be realized, and they may be realized by a combination of electric circuits (circuitry). The managing unit 145 may executes transmission processing of each data and processing for start-up control by executing a predetermined program by the processor using a storage region of the storage unit provided therein. For example, a micro processor (semiconductor device) for control may be applied to the managing unit 145. Hereinafter, the above-mentioned parts will be described in sequence.

The communication processor 145c communicates with the BMU 1212 of the battery 121 via the transceiver 143 and the CAN-BUS.

The state detector 145s detects a state of the battery 121 that receives the activating signal ACT, a communication state on the battery 121, or the like, on the basis of the results of communication with the battery 121 by the communication processor 145c.

The state detector 145s lights the LED of the notifying part 142B and the LED 145D using a display method that enables identification of the results on the basis of the detected results. The display method of enabling identification of the detected results may display in a period in which a lighting state of the LED of the notifying part 142B and the LED 145D and a lights-out state are repeated and a proportion (DUTY) of the lighting state in the period, or the like, are in accordance with a previously predetermined regulation. Further, the LED 145D is provided on a unit PB.

The clocking part 145t is, for example, a period timer including a counter configured to count a clock pulse of a predetermined period. The controller 145tc performs detection until, for example, initialization processing is executed after conduction of the managing unit 145 and a predetermined time thereof elapses. The clocking part 145t may measure an elapsed time from reception of an occupant's intention (for example, an operation based on an occupant's demand) by the external start-up switch 148E (input part). In this case, it is preferable to use an average value to approximate the time when the initialization processing is executed after conduction of the managing unit 145.

The controller 145tc controls the DC/DC conversion part 149 and outputs the activating signal ACT from the DC/DC conversion part 149 when the predetermined time elapses.

For example, the controller 145tc may be controlled such that the switching controller 1219 is switched when the elapsed time measured by the clocking part 145t is a predetermined level or more, or the switching controller 1219 is not switched when the elapsed time measured by the clocking part 145t is less than the predetermined level. The reference value (threshold) when the elapsed time is compared may be, for example, 1 second or the like.

Further, the clocking part 145t counts the elapsed time from notification of the demand to the BMU 1212 of the battery 121. The controller 145tc may detect abnormality of communication and detect the display method of the LED 145D and the LED 145E according to the detection results when there is no response to the demand until the counted results by the clocking part 145t reaches the predetermined value.

The managing unit 145 of the embodiment may be configured to adjust a reference value of a magnitude of charging current of the DC/DC conversion part 146, which will be described below.

The DC/DC conversion part 146 is a direct current electric power converter configured to generate direct current electric power for charging the secondary battery 147, which will be described below, through constant voltage control of a voltage with a desired magnitude or constant current control of a current with a desired magnitude. The first input of the DC/DC conversion part 146 is connected to the terminal 140p of the connector CN1. The second input of the DC/DC conversion part 146 is connected to the terminal a of the connector CN2. The DC/DC conversion part 146 generates direct current electric power for charging the secondary battery 147, which will be described below, and outputs the direct current electric power from the output terminal. The output terminal of the DC/DC conversion part 146 is connected to the positive electrode of the secondary battery 147 and the terminal b of the connector CN3, which will be described below, via the wiring L2 on the unit PB.

The DC/DC conversion part 146 may be configured to include, for example, a semiconductor device 146IC for electric power conversion and a peripheral circuit thereof, and a constant voltage diode 146ZD. The semiconductor device 146IC is configured to perform the constant voltage control of the output voltage by detecting the voltage divided by a voltage dividing resistor RVD connected to the OUT terminal as a voltage of an FB terminal. The semiconductor device 146IC includes a current sensor provided therein and configured to detect the output current, and is configured to perform the constant current control of the output current on the basis of the detection results of the output voltage and the detection results of the output current. Further, the output current can be adjusted by adjusting joint impedance of a plurality of resistors (RIT) connected to a PROG terminal. A driver 146Q is a switch configured to switch the joint impedance of the resistor (RIT) according to the control of the managing unit 145 by adjusting the magnitude of the output current of the semiconductor device 146IC.

The semiconductor device 146IC displays the state during charging according to the lighting state of the LED 146D. The peripheral circuit of the DC/DC conversion part 146 includes capacitors configured to stabilize an input voltage and an output voltage, respectively, the constant voltage diode 146ZD configured to prevent an over-voltage from being output to the terminal a of the connector CN2. The semiconductor device 146IC may be configured to limit a charging time to secure a charging duration of a predetermined length. Alternatively, the charging time may not be limited, and the charging may be interrupted according to the detection results of the voltage and the current.

The secondary battery 147 has a negative electrode terminal that is grounded, and a positive electrode terminal connected to an output terminal of the DC/DC conversion part 146 in parallel. The secondary battery 147 is charged by the output voltage of the DC/DC conversion part 146, and stores the electric power for starting up the battery 121.

The switch 148 is a switch connected between the terminal a and the terminal b of the connector CN3 in parallel. Since the external start-up switch 148E is connected to the connector CN3, the switch 148 is wired in parallel with the external start-up switch 148E. Both the switch 148 and the external start-up switch 148E are of a temporary type, that is, a type of switch whose contacts are conductive only during a duration in which an operation knob is pushed.

The first input of the DC/DC conversion part 149 is connected to the external start-up switch 148E via the terminal a of the connector CN3 like the input of the activating signal generator 141. The second input of the DC/DC conversion part 149 is connected to the output of the DC/DC conversion part 144a. The output to the DC/DC conversion part 149 is connected to a semiconductor device that forms the managing unit 145 and a power source terminal of the transceiver 143. When an input voltage of any one of the first input and the second input is a rated input voltage range, the DC/DC conversion part 149 generates and outputs the direct current voltage for functioning the managing unit 145 and the transceiver 143 according to this.

The start-up device 140 configured as described above can control the started-up state of the battery 121 according to the operation of the external start-up switch 148E.

Further, a voltage conversion part 146 is disposed on a route from the terminal 140p (input terminal) of the connector CN1 to the terminal 140a (output terminal) of the connector CN1, and supplies the electric power after conversion of the voltage of the terminal 140p to the secondary battery 147 (power source part). In this case, an allowance input voltage allowed to the terminal 140p and an allowance output voltage allowed to the terminal 140a may be different from each other.

An electric circuit of an electric power transmission route configured to transmit electric power from the secondary battery 147 to the switching controller 1219 is provided between the secondary battery 147 and the switching controller 1219. The route is referred to as a start-up route. Describing the start-up route in detail, for example, a route reaching the switching controller 1219 from the connector CN121C of the battery 121 is provided through the wiring L2, the external start-up switch 148E, the wiring L1, the activating signal generator 141, and the connector CN1 via the activating line 1217 using the secondary battery 147 in the start-up device 140 as a starting point.

Further, an electric circuit of an electric power transmission route configured to transmit electric power from the battery main body 1211 to the switching controller 1219 is provided between the battery main body 1211 and the switching controller 1219 of the battery 121. The route is referred to as a route in start-up. Describing the route in start-up in detail, for example, a route in which using the battery main body 1211 in the battery 121 as a starting point, passes through the high potential terminal 121P via a switch 1213 and the electric power transmission route PL, passes through an electric power wiring in a vehicle BD, passes through the terminal 140p of the connector CN1 of the start-up device 140, the wiring L3, the DC/DC conversion part 146, the wiring L2, the external start-up switch 148E, the wiring L1, the activating signal generator 141, and the connector CN1,passes through the activating line 1217, and reaches the switching controller 1219 from the connector CN121C of the battery 121. Further, the above mentioned route is established in a state in which the secondary battery 147 is connected to the wiring L2.

The battery 121 includes a start-up route and a route during start-up in parallel with the start-up route as electric power transmission routes with respect to the switching controller 1219 by using the start-up device 140.

The battery 121 can receive electric power for control through the above-mentioned two routes while being mounted on the motorcycle 1, and an operation state is determined according to the control from the start-up device 140 or the like.

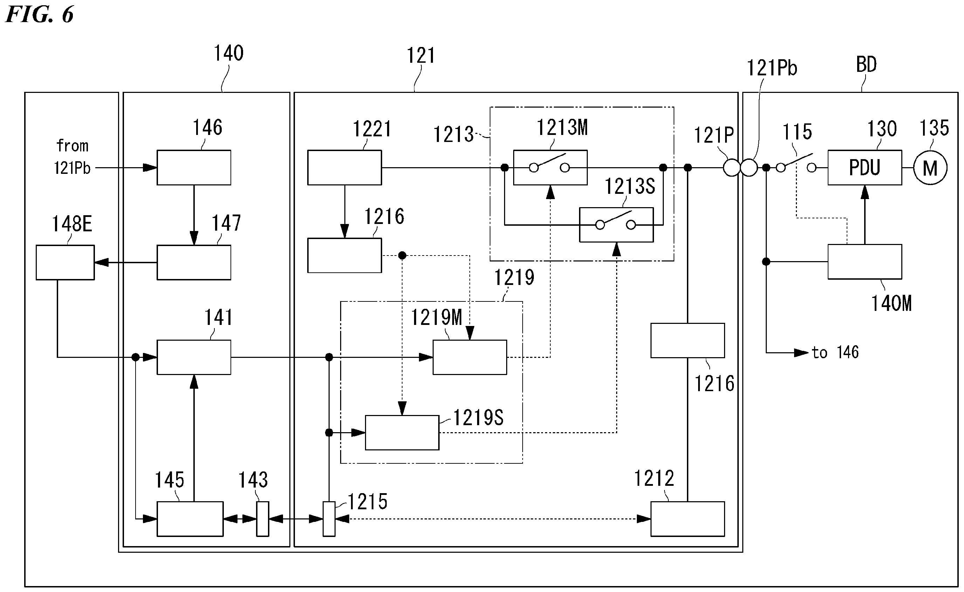

Next, referring to FIG. 6, the battery 121 in which suppression control of inrush current is performed will be described. FIG. 6 is a schematic configuration view of a power source system of the embodiment. In FIG. 6, vehicle body-side circuits are arranged in the external start-up switch 148E, the start-up device 140, the battery 121, and the vehicle body BD in sequence from the left side.

The switch 1213 in the battery 121 includes a main relay switch 1213M (first connecting/disconnecting part) and a sub relay switch 1213S (second connecting/disconnecting part), which are connected in parallel with each other. The impedance of the switch 1213M in the conduction state (or the conduction start stage) is formed to be relatively small. On the other hand, the impedance of the switch 1213S in the conduction state is formed to have a predetermined magnitude or more. When the impedance of the switch 1213M in the conduction state and the impedance of the switch 1213S in the conduction state (or the conduction start stage) are compared, the impedance of the latter is greater than that of the former. The impedance of the switch 1213S in the conduction state may be determined for the purpose of reducing the inrush current to a desired magnitude. Here, conditions of the battery 121 upon charging may be decided additionally.

The switch 1213M and the switch 1213S constitute the switch 1213. The power source input of the power source part 1216 is connected to the switch 1213M and the switch 1213S on the side of the high potential output terminal 121P.

The switching controller 1219 includes the switching controller 1219M and the switching controller 1219S. The switching controller 1219M controls the switch 1213M according to the state of the activating signal ACT. The switching controller 1219S controls the switch 1213S according to the state of the activating signal ACT. The switching controller 1219M and the switching controller 1219S include timers with different lengths. The length of the timer of the switching controller 1219S is smaller than that of the switching controller 1219M. The length of the timer of the switching controller 1219S may be 0. Further, the switching controller 1219S may adjust equivalent impedance of the switch 1213S.

According to the above-mentioned configuration, the battery 121 includes an electric power transmission route [electric circuit] configured to electrically connect the battery main body 1211 and the switching controller 1219 as an electric power transmission route in parallel with the start-up route that is an electric power transmission route [electric circuit] between the secondary battery 147 (power source part) and the switching controller 1219.

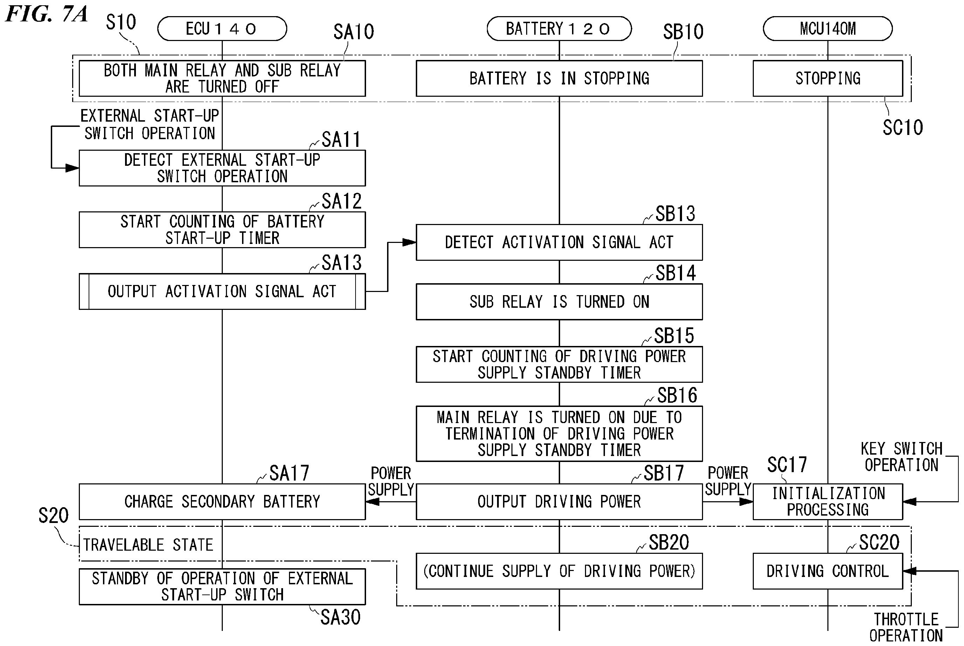

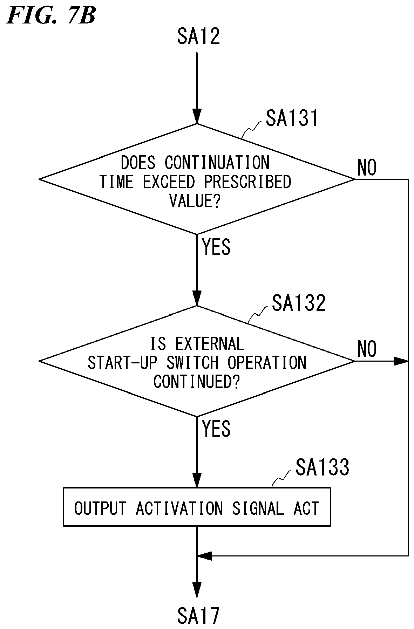

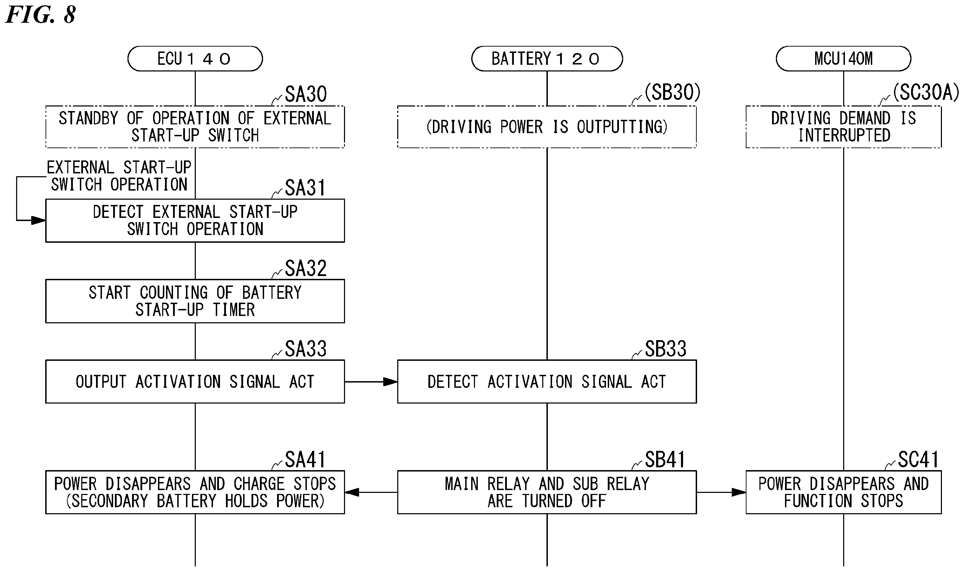

Referring to FIG. 7 and FIG. 8, a start-up sequence and a non-start-up sequence of the battery 121 of the embodiment will be described.

### <Start-up sequence>

First, an example of a typical start-up sequence of the battery 121 is shown.

An occupant performs the following operations for the motorcycle 1.
(1) The occupant operates the key switch knob 99 and sets a key switch to LOCK or OFF, for example, in a step of use of the motorcycle 1 is started.
(2) The occupant mounts the charged battery 121 on the motorcycle 1.
(3) The occupant pushes the external start-up switch 148E with long press.
(4) The occupant confirms ring of the chime, operates the key switch knob 99 after a prescribed time (for example, about one second) elapses from that time, and turns ON the key switch.
(5) The occupant returns the side stand 18 to the side of the vehicle body.
(6) The occupant holds the rear wheel brake lever 28 for a predetermined time (for example, about two seconds) continuously, and then, releases the rear wheel brake lever 28.
(7) The occupant operates the throttle grip 2R and starts traveling.

Among these, (1), (2) and (5) may be omitted when the above-mentioned conditions are satisfied. Regarding the above-mentioned (3) and (4), the control for activation of the battery 121 will be described with reference to FIG. 7A and FIG. 7B. FIG. 7A is a flowchart of a sequence in the started-up state of the battery 121 of the embodiment.

In an initial state (S10) of the start-up device 140, the secondary battery 147 is sufficiently charged, and both the main relay switch 1213M and the sub relay switch 1213 S are in an OFF state. The start-up device 140 keeps the operation of the external start-up switch 148E (SA10) in a standby state. Further, the managing unit 145 is not conducted.

While the initial state of the battery 121 is sufficiently charged as described above, the output is stopped because the battery 121 is in the non-started-up state in which both the main relay switch 1213M and the sub relay switch 1213 S are in the OFF state (SB 10).

The MCU 140M is a stopping state in a state in which no power is supplied (SC10).

First, when an operation of pushing the external start-up switch 148E for a predetermined time continuously by the occupant (this is simply referred to as "an external start-up switch operation") is performed, the activating signal generator 141 and the DC/DC conversion part 149 of the start-up device 140 detect a voltage increased according to the external start-up switch operation (referred to as "an input voltage") and starts voltage conversion. After this, the managing unit 145 starts counting of the battery start-up timer (SA12) when the input voltage is detected (SA11) after electric power is supplied from the DC/DC conversion part 149. After that, the managing unit 145 continues detection of the input voltage. The managing unit 145 controls the activating signal generator 141 according to this and outputs the activating signal ACT to the battery 121 from the activating signal generator 141 (SA13) when predetermined conditions are satisfied. Here, it is preferable that, for example, notification is performed from the notifying part 142B or 142C by ringing or the like of the chime to show that the activating signal ACT is output and control of starting up the battery 121 is started.

Here, the predetermined conditions in the above-mentioned SA13 will be described with reference to FIG. 7B. FIG. 7B is a flowchart of processing of outputting the activating signal ACT of FIG. 7A.

After completion of the SA12, the managing unit 145 determines whether the battery start-up timer exceeds a prescribed value (SA131). When the battery start-up timer exceeds the prescribed value, the managing unit 145 determines whether the external start-up switch operation is continued (SA132). When the external start-up switch operation is continued, the managing unit 145 controls the activating signal generator 141 and outputs the activating signal ACT to the battery 121 from the activating signal generator 141 (SA133), and advances the processing to SA17.

On the other hand, in the above-mentioned SA131, when the battery start-up timer does not exceed the prescribed value or when the external start-up switch operation is not continued in the SA132, the managing unit 145 does not output the activating signal ACT and returns the processing to S10.

Description returning to FIG. 7A is continued. The switching controller 1219S of the battery 121 detects the activating signal ACT (SB13), and controls the switch 1213S (sub relay) to an ON state (SB14). Accordingly, precharge is started in the circuit in the battery 121.

The switching controller 1219M starts clocking of the driving electric power supply standby timer in accordance with the above-mentioned situation (SB15). The switching controller 1219M controls the switch 1213M (main relay) to an ON state when the driving electric power supply standby timer is expired (SB16). Accordingly, the battery 121 is in a state in which electric power for driving can be supplied. The power source part 1216 supplies a signal which indicates an electric power feeding to the switching controller 1219.

The battery 121 outputs driving electric power according to a load operation (SB 17).

For example, when the operation of the key switch knob 99 is performed, the contactor 115 is in the ON state by the control of the MCU 140M, and the driving electric power can be supplied to the electric motor 135. The MCU 140M executes initialization processing according to this (SC17), and goes on standby in a stage in which the initialization processing is terminated.

When the voltage (driving electric power) from the battery 121 is supplied to the start-up device 140, the start-up device 140 charges the secondary battery 147 on the basis of this (SA17). Further, when the voltage (driving electric power) from the battery 121 is supplied to the start-up device 140, the DC/DC conversion part 141a of the discharging part 144 drops the voltage from the battery 121 to a predetermined voltage, and transmits the dropped voltage to the DC/DC conversion part 149 to become electric power of the power source such as the managing unit 145 or the like. Accordingly, the electric power supplied to the power source of the managing unit 145 is based on the electric power from the battery 121 and are stabilized.

According to the above-mentioned sequence, the battery 121 continues supply of the driving electric power (SB20), and the signal indicating the electric power feeding of the power source part 1216 is continuously supplied to the switching controller 1219. The MCU 140M controls the PDU 130 on the basis of the detection results of the operation of the throttle grip 2R and controls driving of the electric motor 135 (SC20), and thus, the motorcycle 1 is in a travelable state (S20).

Further, the start-up device 140 is in a state in which an operation of the external start-up switch 148E can be detected (SA30). In addition to the above-mentioned processing, the managing unit 145 of the start-up device 140 may communicates with the BMU 1212 of the battery 121, detect a state or the like of the battery 121, and display the results on the LED 145E.

Further, when the battery 121 is in the started-up state, the start-up device 140 can use the electric power from the battery 121. In a duration in which the battery 121 is in the started-up state, the secondary battery 147 is in a charging duration, and electric power from the battery 121 is used while including electric power required in the start-up device 140. This is the same as "a termination sequence," which will be described below.

### <Termination sequence>

Next, an example of a typical termination sequence of the battery 121 is shown.

The occupant performs the following operations for the motorcycle 1 after the driving termination.
(1) The occupant operates the key switch knob 99 and sets the key switch to OFF.
(2) The occupant pushes the external start-up switch 148E with long press exceeding a prescribed time (for example, about one second).

Accordingly, the battery 121 becomes in the non-started-up state.

According to the above-mentioned (2), control for non-activation of the battery 121 will be described with reference to FIG. 8. FIG. 8 is a flowchart showing a sequence of setting the battery 121 of the embodiment to the non-started-up state.

An initial state (SA30) of the start-up device 140 in FIG. 8 corresponds to a final state of the above-mentioned sequence of FIG. 7. The initial state of the battery 121 is an activation state in which both the switch 1213M (main relay) and the switch 1213 S (sub relay) of the battery 121 are in the ON state (SB20). The MCU 140M is in a suspended state of the driving demand operation in which the key switch is set to OFF (SC30A).

First, when the external start-up switch operation is performed as described above, the activating signal generator 141 and the DC/DC conversion part 149 of the start-up device 140 detect an input voltage according to the external start-up switch operation and start voltage conversion. The managing unit 145, electric power for a power source of which is already supplied, starts counting of the driving electric power supply standby timer (SA32) when the input voltage is detected (SA31). After that, the managing unit 145 continues detection of the input voltage. The managing unit 145 controls the activating signal generator 141 according to this and outputs the activating signal ACT to the battery 121 from the activating signal generator 141 (SA33) when the predetermined conditions are satisfied. Here, for example, the managing unit 145 makes it possible to distinguish events from the start-up by not notifying ringing or the like of the chime from the notifying part. Further, the predetermined conditions may be the same as those shown in the above-mentioned SA13. In this case, the processing of FIG. 7B can be applied.

The battery 121 detects the activating signal ACT (SB33). As described above, the battery 121 is already in the started-up state, and both the switch 1213M (main relay) and the switch 1213S (sub relay) are in the ON state. For example, the switching controller 1219 of the battery 121 detects the activating signal ACT again in a duration in which the battery 121 is in the started-up state. In this case, the switching controller 1219 performs control of the operation of the switching controller 1219 different from the control of the battery 121 upon start-up. For example, the switching controller 1219 operates the switch 1213M (main relay) and the switch 1213S (sub relay) as toggle switches.

More specifically, when the switching controller 1219 detects the activating signal ACT in the duration, the switching controller 1219 sets the switch 1213M (main relay) and the switch 1213S (sub relay) to the OFF state (SB41). As a result, the battery 121 is in the non-started-up state, and stops supply of the electric power to the outside of the start-up device 140 loses the electric power and stops charging the secondary battery 147 (SA41). Further, the secondary battery 147 holds the electric power charged thereto. The MCU 140M loses the electric power and stops the function thereof (SC41).

Accordingly, the battery 121 can be made to the non-started-up state.

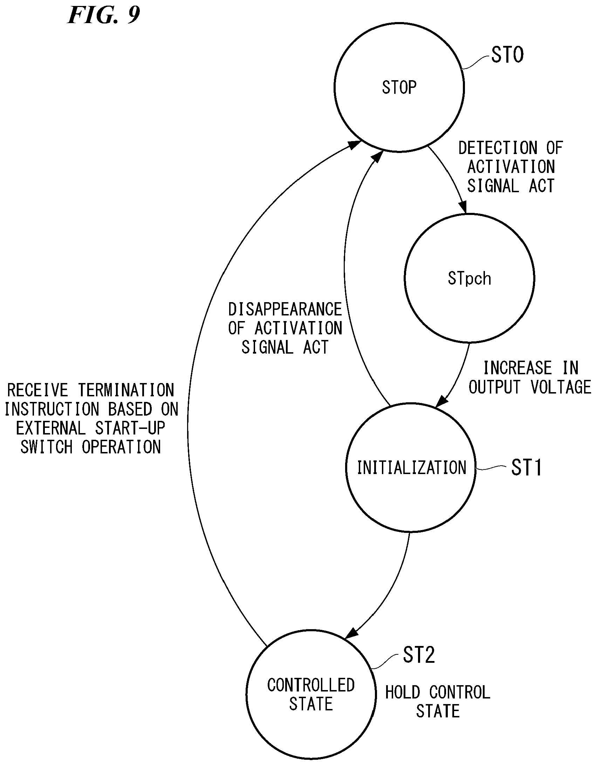

FIG. 9 is a view for describing a state shift of the battery 121 of the embodiment. In FIG. 9, the state shift of the battery 121 is shown. Hereinafter, states of the battery 121 will be described in sequence.

### State ST0: Standby state (stopped state)

First, the battery 121 is in the stopped state (non-started-up state) in which neither charging nor discharge is provided. In other words, the stopped state (non-started-up state) is a state in which the electric power of the battery main body 1211 cannot be output to the outside of the battery 121 or the electric power outside of the battery 121 cannot be input to the battery main body 1211. The battery 121 in this state is a standby state in which the activating signal ACT can be detected. The switching controller 1219 shifts the control state to a state STpch in which precharge is executed when the activating signal ACT is detected.

### State STpch: Precharge state

In the precharge state, the switching controller 1219 shifts the sub relay switch 1213S to a conduction state while the main relay switch 1213M is in an open state when the activating signal ACT is detected. After that, when the predetermined time elapses, the switching controller 1219 shifts the main relay switch 1213M to a conduction state, and sets both the switch 1213M and the switch 1213S to the conduction state. Accordingly, the inrush current upon the precharge can be suppressed. For example, when the output voltage of the power source part 1216 is increased to exceed the predetermined voltage, the BMU 1212 is in the state ST1 in which the initialization processing is executed.

### State ST1: Initialization state

In the initialization state, the BMU 1212 performs the previously determined initialization processing. The BMU 1212 shifts the control state to the controlled state (the state ST2) by termination of the initialization processing. Further, a time required for the initialization processing can be estimated in advance, and for example, is sufficiently shorter than a time T1. However, when the activating signal ACT is interrupted during initialization processing, the BMU 1212 shifts the control state to the standby state (the state ST0) in which the activating signal ACT is on standby.

### State ST2: Controlled state

The controlled state (started-up state) is a state in which the electric power of the battery main body 1211 can be output to the outside of the battery 121 or the electric power of the outside of the battery 121 can be input to the battery main body 1211. For example, the motorcycle 1 can travel using the electric power of the battery 121 by the control from the MCU 140M when it is in the controlled state.

Further, the battery 121 is shifted to the state ST0 (stopped state) when a termination instruction is received based on the operation of the external start-up switch 148E. For example, the termination instruction based on the operation of the external start-up switch 148E corresponds to detection of the activating signal ACT in the activation state as described above.

According to the above-mentioned embodiment, the switching controller 1219 of the battery 121 switches between a started-up state in which the electric power of the battery main body 1211 can be output to the outside of the power storage device or in which the electric power of the outside of the power storage device can be input to the battery main body 1211 and a non-started-up state in which the electric power of the battery main body 1211 cannot be output to the outside of the power storage device or in which the electric power of the outside of the power storage device cannot be input to the battery main body 1211. The start-up device 140 is provided outside of the battery 121, and convenience of the motorcycle 1 to which the battery 121 is applied can be further increased by providing the secondary battery 147 electrically connectable to the switching controller 1219.

Further, a state switching operation in the switching controller 1219 is performed by the electric power supplied to the switching controller 1219 from the secondary battery 147 (power source part).

### (Second embodiment)

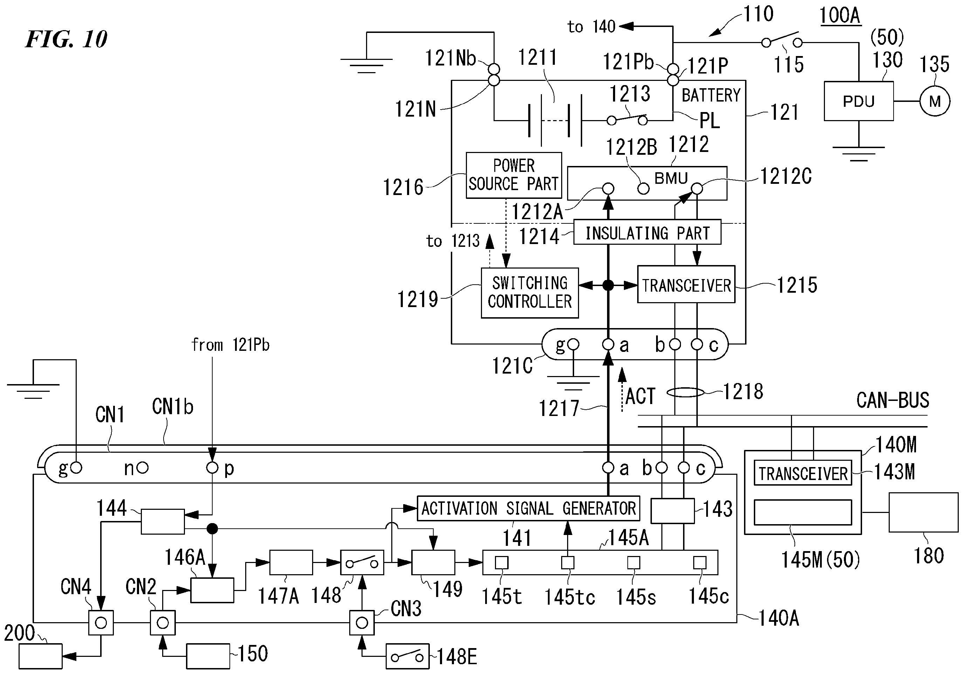

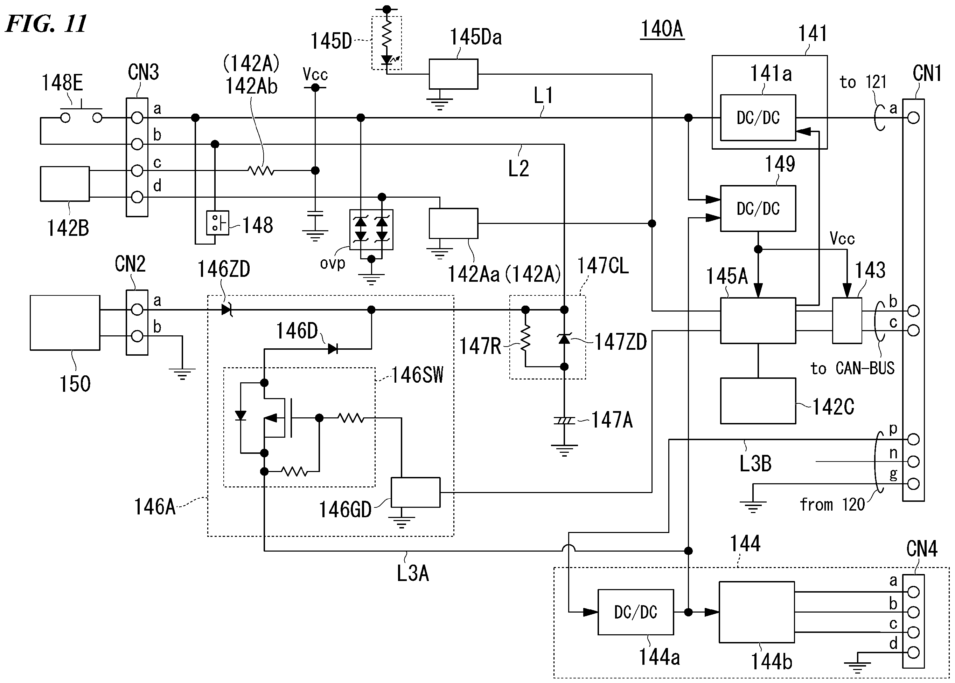

Hereinafter, a second embodiment will be described with reference to FIG. 10 and FIG. 11.

While the case in which the secondary battery 147 used in the first embodiment has been described, a case in which a capacitor 147A is used instead of this will be described in the second embodiment.

FIG. 10 is a block diagram of the motorcycle 1 of the second embodiment. Hereinafter, difference will be described mainly. A control system 100A includes a start-up device 140A instead of the start-up device 140 of the above-mentioned control system 100.

Here, referring to FIG. 11, a configuration example of the start-up device 140A of the second embodiment will be described. FIG. 11 is a schematic configuration view of the start-up device 140A of the second embodiment.

The start-up device 140A includes a managing unit 145A, a DC/DC conversion part 146A, a capacitor 147A (power source part), and a current restriction unit 147CL, instead of the managing unit 145, the DC/DC conversion part 146, and the secondary battery 147 of the start-up device 140.

The capacitor 147A has a negative electrode terminal that is grounded, and a positive electrode terminal connected to an output terminal of the DC/DC conversion part 146A via the current restriction unit 147CL in parallel. The capacitor 147A is charged by the output voltage of the DC/DC conversion part 146A, and stores electric power for starting up the battery 121.

The over-voltage restriction unit 147CL is a protection circuit configured to restrict occurrence of an over-voltage between the terminals of the capacitor 147A through overcharging of the capacitor 147A. For example, the over-voltage restriction unit 147CL is configured as a parallel circuit of a resistor 147R and a constant voltage diode 147ZD that is reversely biased.

The managing unit 145A of the embodiment can cut off the connection between the capacitor 147A and the discharging part 144 by controlling a switch 146SW, which will be described below.

The DC/DC conversion part 146A rectifies direct current for charging the capacitor 147A.

A first input of the DC/DC conversion part 146A is connected to the output of the DC/DC conversion part 144a of the discharging part 144. A second input of the DC/DC conversion part 146A is connected to the terminal a of the connector CN2. The DC/DC conversion part 146A charges the capacitor 147A on the basis of the direct current electric power supplied from the battery 121 via the DC/DC conversion part 144a or the direct current electric power supplied from the external device (for example, the charging device 150 or the like) of the start-up device 140. The DC/DC conversion part 146A outputs the direct current electric power from the output terminal. Further, the output terminal of the DC/DC conversion part 146A is connected to the over-voltage restriction unit 147CL and the terminal b of the connector CN3.

The start-up device 140A has the above-mentioned differences from the above-mentioned start-up device 140, but can be used in place of the start-up device 140. Further, types of media that store electric power are different like the secondary battery 147 and the capacitor 147A, but a capacity required for each case may be selected.

The embodiment also has the same effects as the first embodiment.

### (Third embodiment)

Hereinafter, a third embodiment will be described.

The motorcycle 1 shown in the first and second embodiments is an example of the power device to which the battery 121 is applied. In the embodiment, another case of the power device to which the battery 121 is applied will be described.

For example, the power device of the embodiment is used in various forms of usage. Hereinafter, some forms of usage are exemplified.
- A case in which electric power is stored in the battery 121 and the electric power is used (Case 1)
- A case in which the electric power stored in the battery 121 is used (Case 2)
- A case which stores electric power in the battery 121 (Case 3)

Here, the battery 121 in each exemplified case can be detachably attached to a main body of each power device or a driving part provided in each power device in any case.

### (Case 1)

As the typical form of usage of the power device in the case in which electric power is stored in the battery 121 and the electric power is used (Case 1), a form of usage of a vehicle (moving body) or the like configured to convert the electric power into power using an electric motor or the like.

For example, in some cases, the power of the electric motor is transmitted to wheels to drive the wheels and makes the vehicle travel. Vehicles that carry people include an automobile (referred to as an electric automobile, an electrically driven automobile, a hybrid car, an electrically driven three-wheeled vehicle, or the like), an autobicycle (electrically driven motorcycle, it correspond to the first embodiment), a bicycle, a unicycle, and the like. Vehicles that carry things include a carrier, a bogie (an autonomous traveling vehicle), and the like. There are no restrictions on the number of wheels of the vehicle, the number of driving wheels, disposition of driving shafts, a driving control method, a steering control method, and the like.

In the case of such a vehicle, in addition to powering an electric motor using electric power, energy generated in the electric motor during braking may be regenerated. It becomes the case corresponding to Case 1 by charging the electric power generated by the regeneration to the battery 121.

Further, the device classified as Case 1 may include a device having a driving part configured to transmit power of an electric motor to wheels and drive the wheels and use the power for a predetermined purpose as well as traveling the vehicle. Vehicles vehicle formed to support specified works include, for example, a lawn mower, a snow remover, and the like. Application examples of the power device include construction equipment used in civil/construction industries and the like. A building machine is an example of a moving body having smaller movement than that of a general vehicle (passenger car). By electrifying power for works of such construction equipment, noise during work can be reduced, and influence on an ambient environment can be reduced.

While the above-mentioned example is an example of the vehicle (moving body) that moves on the ground (on a planar surface), it may be applied to a flying object (moving body) that flies by turning a propeller using power. The flying object may be with or without a passenger. In addition, it may also be applied to a ship (moving body). An electric motor mounted on the ship may be used as a propulsion device for a ship.

Further, the device classified as Case 1 may include a device having a driving part that uses the power for a predetermined purpose without using the electric power for traveling power.

### (Case 2)

The power device in Case 2 in which the electric power stored in the battery 121 is used includes the following devices, in addition to the power device corresponding to the above-mentioned Case 1.

For example, the power device in Case 2 includes a device configured to supply the electric power stored in the battery 121 to other equipment. Such a power device may be referred to as a power feeder, a discharger, or the like.

The power device converts the electric power that operates the other equipment into electric power with a predetermined rated voltage in a predetermined method (direct current or alternating current, and in the case of the alternating current, including conditions of the number of phases such as a single phase, three phases, or the like) using an electric power conversion device included therein, and outputs the electric power to the outside of the power device.

Further, the above-mentioned power device may be formed to store electric power in the battery 121 using electric power supplied by other equipment, in addition to the case in which electric power stored exclusively in the battery 121 is supplied to the other equipment. In this case, even a power device having a power feeding function such as a power feeding machine may be referred to as a charger configured to store electric power in the battery 121. Such a power device includes a device having functions of both the power feeding machine and the charger.

### (Case 3)

The power device in Case 3 in which electric power is stored in the battery 121 includes a so-called charger for the battery 121. Further, the power device in Case 3 may include an electric power converter (a DC/DC converter, a rectifier, or the like) configured to generate a direct current voltage to charge the battery 121.

In addition, among the power devices configured to charge the plurality of batteries 121, the device may be referred to as an exchanger (battery exchanger) or the like. Such an exchanger is an example of the device in Case 3.

As described above, in each of the power devices, by using the start-up device 140 or a device similar to the start-up device 140 as the start-up device of the battery 121, the started-up state and the non-started-up state of the battery 121 can be switched like the first and the second embodiments. In this way, the power device to which the battery 121 is applied may include, in addition to the vehicle, a moving body other than the vehicle, a charger, a power feeder, a portably used device, and the like. The portably used device may include a power device such as a reaper for weeds or the like, a blower device configured to blow off dead leaves or the like using generated wind, or the like. The reaper is an example of a lawn mower. In the power devices such as the reaper, the blower device, and the like, the power that operates these is generated by the electric motor using the electric power from the battery 121.

Classification of the cases is set for the sake of convenience in order to divide and describe the functions, and does not limit the power device to have a plurality of functions. For example, the power feeding machine is included in Case 2 and Case 3 as described above. In addition, when the power device in Case 1 in which electric power is used for movement charges the battery 121 using regenerated electric power from an electric power converter (inverter), the device is included in application examples of Case 3, and when electric power from the battery 121 is supplied to auxiliary machinery further included in the power device using another electric power converter, the device is also included in Case 2 in which electric power stored in the battery 121 is used.

### (Fourth embodiment)

Hereinafter, a fourth embodiment will be described.

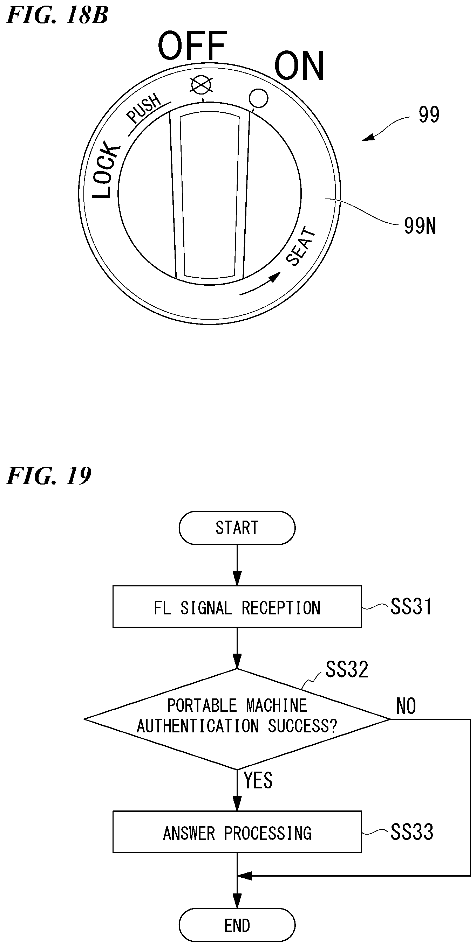

In the embodiment, a more specific example of the motorcycle 1 shown in the first and second embodiments will be described. Further, in the embodiment, a motorcycle 1A configured to activate the battery 121A by operating a knob 99N (FIG. 18B) of a key switch 99 (FIG. 1) will be described.

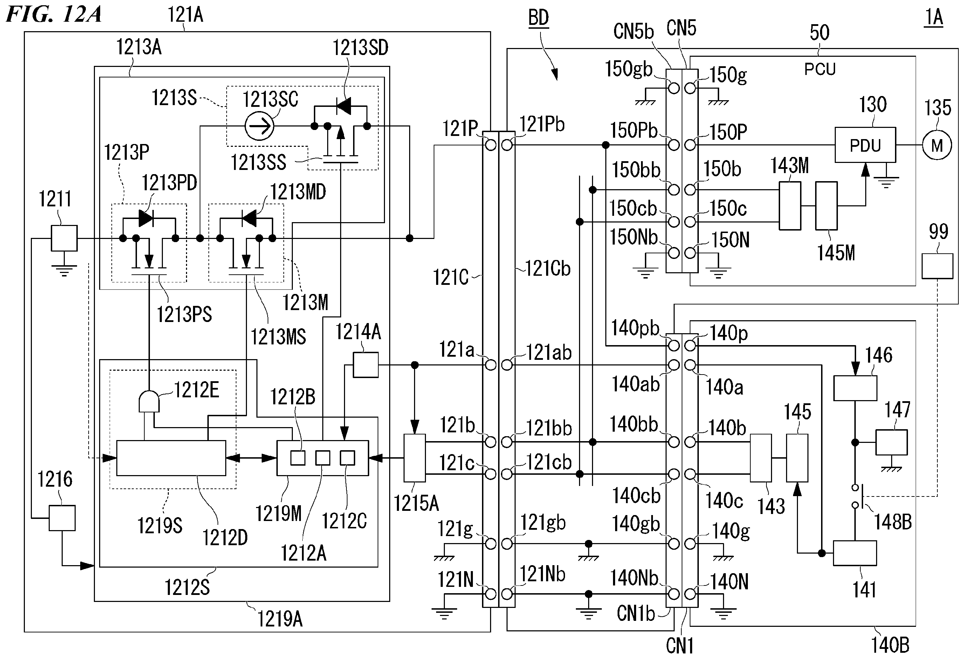

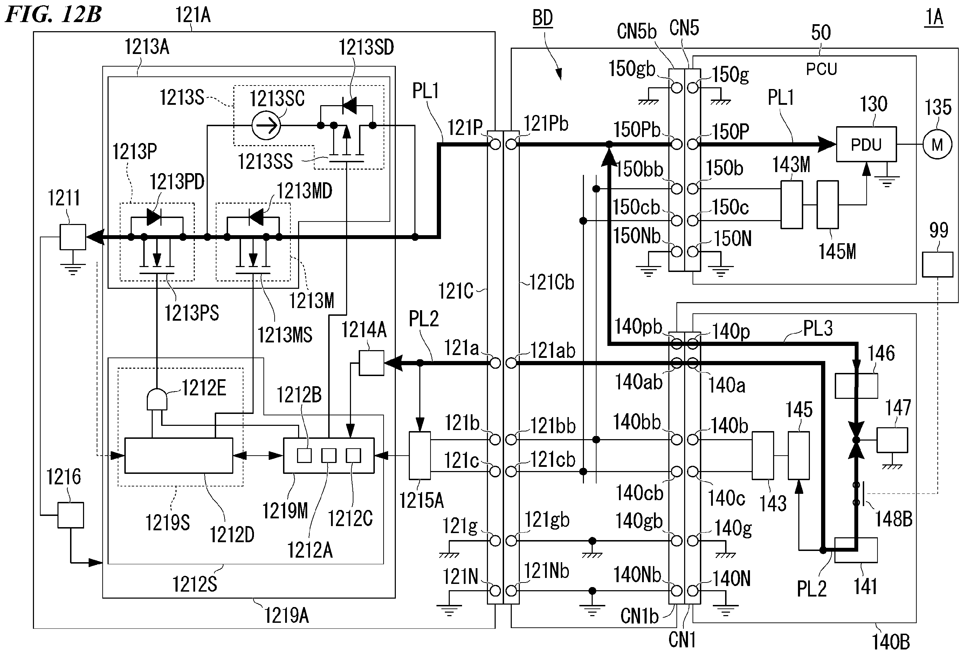

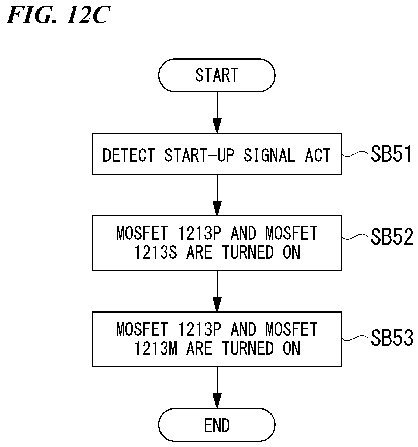

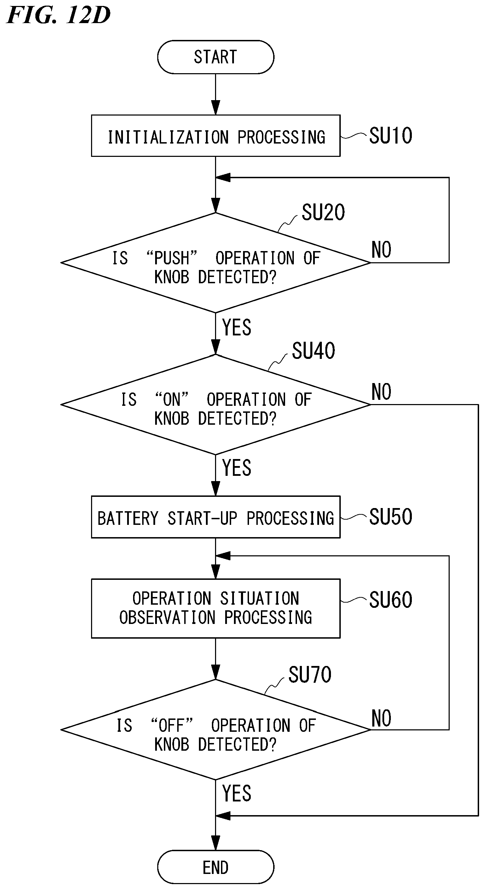

Referring to FIG. 12A and FIG. 12B, a power source system of the motorcycle 1A of the embodiment will be described. FIG. 12A is a schematic configuration view of the power source system of the fourth embodiment. FIG. 12B is a view for describing the power source system shown in FIG. 12. In FIG. 12A, a battery 121Ais shown on the left side, and a vehicle body-side circuit mounted on the vehicle body BD and including the PCU 50 and a start-up device 140B are shown on the right side.

### (Battery 121A)

The battery 121A of the embodiment corresponds to the above-mentioned battery 121.

For example, the battery 121Aincludes a battery main body 1211 (power storage), a transceiver 1215A, a power source part 1216, a switching controller 1219A, and a connector 121C.

A high potential output terminal 121P, a low potential-side terminal 121N, a terminal 121a, terminals 121c and 121g, and the like, are provided in the connector 121C. Additional terminals other than shown therein may be further provided. Each of these terminals is provided in a common support base (not shown). For example, a female type terminal support base, a female type connector, and the like, disclosed in PCT International Publication No. WO2021/010433 or the like may be applied to the connector 121C and each terminal thereof.

The connector 121C is paired with the connector 121Cb provided on the side of the vehicle BD. A support base of the connector 121C is fitted into a support base of the connector 121Cb. Accordingly, during movement of the vehicle BD, the coupling portion of each terminal is supported not to swing unnecessarily. Terminals on the side of the vehicle BD corresponding to the terminals of the connector 121C are provided on the connector 121Cb. For example, the high potential output terminal 121Pb, the low potential-side terminal 121Nb, and the terminal 121ab to the terminals 121cb and 121gb corresponds to the high potential output terminal 121P, the low potential-side terminal 121N, and the terminal 121a to the terminals 121c and 121g of the connector 121C, respectively. The high potential output terminal 121Pb, the low potential-side terminal 121Nb, and the terminal 121ab to the terminals 121cb and 121gb are examples of the terminals provided on the connector 121Cb. As described above, a male type terminal support base, a male type connector, and the like, disclosed in PCT International Publication No. WO2021/010433 may be applied to the connector 121Cb and each terminal thereof.

The transceiver 1215A includes an insulating circuit configured to insulate a primary side circuit and a secondary side circuit from each other therein, in addition to conversion of the same signal as the transceiver 1215. Further, the insulating function may be configured as a part of the insulating part 1214A, which will be described below. For example, the primary side circuit corresponds to the CAN-BUS standard, and the secondary side circuit outputs a signal to the switching controller 1219A. The primary side circuit of the transceiver 1215A is functioned by using some of the electric power supplied as the activating signal ACT when the activating signal ACT is in a significant state.

The switching controller 1219A includes a BMU 1212S (connecting/disconnecting controller), a bidirectional switch 1213A (connecting/disconnecting part), and an insulating part 1214A. The switching controller 1219A is an example of a configuration including the BMU 1212S, the bidirectional switch 1213A, and the insulating part 1214A.

The insulating part 1214A is constituted by a light coupler or the like, and electrically insulates the side of the BMU 1212S and the side of the connector 121C from each other with respect to the activating signal ACT between the BMU 1212S and the connector 121C. The insulating part 1214A detects the activating signal ACT supplied from the side of the connector 121C, and converts and outputs the signal.

The bidirectional switch 1213A includes a switch 1213M (first connecting/disconnecting part), a switch 1213S (second connecting/disconnecting part), and a switch 1213P (third connecting/disconnecting part). Each of the switch 1213M (first connecting/disconnecting part), the switch 1213S (second connecting/disconnecting part), and the switch 1213P includes a semiconductor switching element (semiconductor changeover element). The bidirectional switch 1213A is an example of a case in which each switch is configured using a semiconductor switching element. In the embodiment, a case in which a MOSFET is applied as a semiconductor switching element is exemplified. A symbol of the MOSFET shown in FIG. 12A includes a diode connected in anti-parallel to the MOSFET main body. The diode may be a body diode of the MOSFET or may be a diode provided separately from the MOSFET. For the purpose of easy description, description will be performed by adding a reference sign to the diode.

For example, the switch 1213M includes a MOSFET 1213MS and a diode 1213MD. The switch 1213S includes a MOSFET 1213SS, a diode 1213SD, and a constant current circuit 1213SC. The switch 1213P includes a MOSFET 1213PS and a diode 1213PD. For example, the MOSFET 1213MS and the MOSFET 1213PS are N channel types, and the MOSFET 1213SS is a P channel type.

A source of the MOSFET 1213PS and an anode of the diode 1213PD are connected to the high potential output terminal 121P.

A drain of the MOSFET 1213MS, a cathode of the diode 1213MD, and a first terminal of the constant current circuit 1213SC are connected to a drain of the MOSFET 1213PS and a cathode of the diode 1213PD. A drain of the MOSFET 1213SS and a cathode of the diode 1213SD are connected to a second terminal of the constant current circuit 1213SC. The constant current circuit 1213SC includes an element having impedance of a predetermined value or more. The constant current circuit 1213SC limits a current value of discharge current to a current value of a predetermined magnitude when a direction of the discharge current is a normal direction. When the current value of the discharge current is less than the predetermined current value, the constant current circuit 1213SC allows the discharge current determined by the impedance or the like of the circuit to flow. The constant current circuit 1213SC is an example of the overcurrent protection circuit. Further, limitation of the current is realized by a combination of the constant current circuit 1213SC and the MOSFET 1213SS.

A source of the MOSFET 1213MS, an anode of the diode 1213MD, a source of the MOSFET 1213SS, and an anode of the diode 1213SD are connected to the high potential output terminal 121P.

The switch 1213M (first connecting/disconnecting part) and the switch 1213S (second connecting/disconnecting part) can set a first state in which both the charging current and the discharge current flow and a second state in which the discharge current flows.

The switch 1213P (third connecting/disconnecting part) can set a third state in which both the charging current and the discharge current flow and a fourth state in which the charging current flows.

For example, a state corresponding to a bidirectional switch is generated by setting both the switch 1213M (first connecting/disconnecting part) and the switch 1213P (third connecting/disconnecting part) to a conduction state or a disconnection state by a combination thereof. In addition, a combination of the switch 1213S (second connecting/disconnecting part) and the switch 1213P (third connecting/disconnecting part) is the same as the case of the above-mentioned combination.

As described above, the MOSFET 1213MS and the MOSFET 1213SS are connected to each other in parallel. The inrush current can be limited by using the MOSFET 1213SS in which the magnitude of the current is limited by the constant current circuit 1213SC at the beginning of discharge or the like.

The bidirectional switch 1213A switches the operation state using connecting/disconnecting control (ON/OFF control) by the BMU 1212S according to the start-up instruction from the start-up device 140B.

### (BMU 1212S)

The BMU 1212S controls the bidirectional switch 1213A. In addition, the BMU 1212S executes control according to some protection functions related to charge/discharge of the battery 121A using the bidirectional switch 1213A. As detailed examples of the protection functions, overcharging protection and overcurrent protection of the battery 121A will be described.

For example, the BMU 1212S of the embodiment further includes a state detector 1212D and a logic synthesizing part 1212E.

The state detector 1212D detects an operation state of the battery main body 1211, a temperature of the bidirectional switch 1213A, and the like. The operation state of the battery main body 1211 includes a voltage of each cell, an SoC, a current flowing through the battery main body 1211, a temperature of the battery main body 1211, and the like.

When the state of the battery main body 1211 satisfies desired conditions, the state detector 1212D outputs a signal that operates the battery 121A. The signal that operates the battery 121A includes a charging validating signal and a discharge validating signal.

The start-up processing according to the activating signal ACT of the battery 121A will be described with reference to FIG. 12C. FIG. 12C is a flowchart of the start-up processing of the battery 121A of the first embodiment.

The active signal detector 1212A of the switching controller 1219M activates the battery control unit 1212B when the activating signal ACT is detected (step SB51).

The battery control unit 1212B of the switching controller 1219M outputs a signal that allows charging of the battery 121 according to the activation requirement, and turns ON the MOSFET 1213PS via the logic synthesizing part 1212E. Further, here, the state detector 1212D outputs the charging validating signal. Further, the battery control unit 1212B outputs the signal that allows discharge, and turns ON the MOSFET 1213SS (step SB52). Further, the battery control unit 1212B may turn ON the MOSFET 1213PS, including notification from the switching controller 1219M.

In a stage in which the predetermined conditions are satisfied, the state detector 1212D turns ON the MOSFET 1213MS via the logic synthesizing part 1212E (step SB53).

Elements of the MOSFET 1213PS, the MOSFET 1213SS, the MOSFET 1213MS are turned ON according to the above-mentioned sequence. The switching controller 2451WO011219M notifies the switching controller 1219S of that such a state is provided.

Further, as described above, a combination of the state detector 1212D and the logic synthesizing part 1212E corresponds to the control by the above-mentioned switching controller 1219S (FIG. 6).

Returning to FIG. 12A, the above-mentioned description is continued. The BMU 1212S of the embodiment is configured to perform two types of protection countermeasure when a situation occurs in which charging of the battery main body 1211 should be limited. A first protection countermeasure is a first protection that releases continuation of the state via the logic synthesizing part 1212E from the active signal detector 1212A. A second protection countermeasure is provided to release continuation of the state via the logic synthesizing part 1212E using diagnosis results of the state detector 1212D obtained by diagnosing results of the state detector 1212D.

For example, according to the control, the state detector 1212D sets the MOSFET 1213PS in the switch 1213S to a conduction state upon the charging in normal times. In addition, the state detector 1212D sets the MOSFET 1213PS to a disconnection state when abnormality of a voltage of each cell of the battery main body 1211, abnormality of a voltage applied to both ends of all cells connected in series (over-voltage state), temperature abnormality of the battery main body 1211, or temperature abnormality of the bidirectional switch 1213A is detected. The state detector 1212D achieves this by controlling a gate voltage of the MOSFET 1213PS of the switch 1213 via the logic synthesizing part 1212E.

### (Start-up device 140B)

The start-up device 140B is configured to be detachably attached to the vehicle BD and the PCU 50, and used in a state connected to the vehicle BD and the PCU 50.

The start-up device 140B may be constituted by basically the same circuit as the start-up device 140 (FIG. 5). FIG. 12A shows its main components. The start-up device 140B includes, for example, an activating signal generator 141, a transceiver 143, a managing unit 145, a DC/DC conversion part 146, a secondary battery 147 (power source part), and a switch 148B.

The switch 148B is connected to the above-mentioned switch 148 (FIG. 5) similarly. The switch 148B interlocks according to the operation of the knob 99N (FIG. 18B) of the key switch 99. For example, when the key switch 99 is turned ON, the switch 148B is conducted. As a result, the electric power of the secondary battery 147 (power source part) is supplied to the activating signal generator 141 via the switch 148B. The activating signal generator 141 supplies the electric power to the battery 121A as the activating signal ACT.

As described above, when supply of the activating signal ACT is detected, the battery 121A starts up according to the detection. When the battery 121A starts up, the electric power from the battery 121A is supplied toward the vehicle BD via the high potential output terminal 121P.

Further, the DC/DC conversion part 146 drops a direct current potential output from the battery 121A, supplies it to the secondary battery 147, and charges the secondary battery 147.

### <Start-up sequence>

Referring to FIG. 12D, an example of a typical start-up sequence of the battery 121A applied to the embodiment is shown. FIG. 12D is a flowchart of a start-up sequence of the battery 121A applied to the fourth embodiment.

In the case of the embodiment, the occupant performs the following operations with respect to the motorcycle 1. For example, the motorcycle 1 is in a state in which the start-up device 140B is connected to the PCU 50.
(1) The occupant operates the knob 99N of the key switch 99 and sets the key switch 99 to the lock ("LOCK") or "OFF," for example, in a stage in which use of the motorcycle 1 starts.
(2) The occupant mounts the charged battery 121 on the motorcycle 1.
(3') The occupant operates the knob 99N of the key switch 99 and sets key switch to "ON."

The start-up device 140B performs initialization processing (step SU10), and goes into a standby state after finishing this. When in the standby state, an operation of pushing the knob 99N (referred to as a "PUSH" operation of the knob 99N) is detected (step SU20), and also the operation in which the knob 99N is further moved to an "ON" position is detected (step SU40), the switch 148B is turned ON in conjunction with this.

Accordingly, the start-up device 140B transmits the activating signal ACT generated by the activating signal generator 141 to the battery 121A and starts activation of the battery 121A, completing the start-up (step SU50). The start-up device 140B outputs chime sound indicating completion of the start-up, and shifts to observation processing of the operation situation (step SU60). The start-up device 140B continues the state until an "OFF" operation of the knob 99N is detected (step SU70).

(4') The occupant checks activation completion of the battery 121A by ringing of the chime.

The sequence of (5) to (7) is the same as the above-mentioned sequence. Further, as in the first embodiment, each sequence may be omitted from the above-mentioned sequence as appropriate.

Further, when the start-up device 140B inactivates the battery 121A and terminates the processing when the "OFF" operation of the knob 99N is detected.

According to the above-mentioned embodiment, the start-up device 140B is provided separately from the PCU 50 and starts up the battery 121A in a state connected to the PCU 50. The start-up device 140B of the embodiment can be disposed separately from the PCU 50 like the above-mentioned start-up device 140 (FIG. 2 and FIG. 3C).

Showing the above from another point of view, the start-up device 140B and the PCU 50 are configured by separate units. As described above, the DC/DC conversion part 146, the switch 148B, the activating signal generator 141, the transceiver 143, and the managing unit 145 are provided in the start-up device 140B of the embodiment. The transceiver 143M and the managing unit 145M are provided in the PCU 50. At least the DC/DC conversion part 146 and the transceiver 143 are mounted on the same unit. On the other hand, the DC/DC conversion part 146 and the transceiver 143M are mounted on separate units. The managing unit 145M is disposed near the PDU 130 (driving part). The transceiver 143M disposed on the same unit as the managing unit 145M and the transceiver 143 disposed on the start-up device 140B are connected to the CAN-BUS. Restriction in physical disposition relation can be attenuated through communication that uses the CAN-BUS in this way. For example, the start-up device 140B can be located at a position separated from the PCU 50 farther than a disposition position exemplified in FIG. 1 to FIG. 3.

Further, the battery 121 is detachably attached to the power device of the motorcycle 1 or the like. The power device may be a power feeder or a charger of other than the motorcycle 1. The power device of the embodiment includes, for example, an operating part that consumes electric power. The PDU 130 and the electric motor 135 are an example of the operating part in the motorcycle 1.

The battery main body 1211 (power storage) of the battery 121, and the operating part of the PDU 130 and the electric motor 135 are electrically connected to the first electric power transmission route PL1 (FIG. 12B).

The secondary battery 147 and the switching controller 1219 are electrically connected via the second electric power transmission route PL2 (FIG. 12B). The first electric power transmission route PL1 and the second electric power transmission route PL2 are an example of an electric power transmission route [electric transmission route].

The start-up device 140 has a first external connecting portion to which the power source outside of the start-up device 140 is connected. A terminal 140P of the connector CN1 of the embodiment is an example of the first external connecting portion. For example, the battery 121 is connected to the terminal 140P. The secondary battery 147 is electrically connected to the terminal 140P of the connector CN1.

The secondary battery 147 is electrically connected to the first electric power transmission route PL1 via the third electric power transmission route PL3 (FIG. 12B). The third electric power transmission route PL3 is an example of the electric power transmission route. The third electric power transmission route PL3 is connected to the terminal 140P.

In the start-up device 140 of the above-mentioned motorcycle 1, the DC/DC conversion part 146 (electric power conversion part) is provided on the third electric power transmission route PL3. The DC/DC conversion part 146 is an example of the step-down unit. Further, a position where the DC/DC conversion part 146 is provided may be located on the third electric power transmission route PL3. The DC/DC conversion part 146 may be disposed in the start-up device 140 without limitation, and may be located outside of the start-up device 140, for example, as long as it is inside the motorcycle 1.

Hereinafter, the battery 121 of the embodiment is organized.

The battery 121 starts up by receiving the activating signal ACT (start-up signal) from the start-up device 140. The battery 121 includes the battery main body 1211 (power storage) and the switching controller 1219S. The switching controller 1219S is configured to switch between the started-up state and the non-started-up state by the electric power from the start-up device 140.

The battery 121 includes the high potential output terminal 121P (second electric power connecting portion) and the terminal 121a (fourth electric power connecting portion). The high potential output terminal 121P (second electric power connecting portion) is the former of a pair of a high potential output terminal 121Pb (first electric power connecting portion) and a high potential output terminal 121P (second electric power connecting portion), which are placed in the first electric power transmission route PL1 and attachable/detachable from each other. The terminal 121a (fourth electric power connecting portion) is the former of a pair of a terminal 121ab (third electric power connecting portions) and a terminal 121a (fourth electric power connecting portion), which are placed in the second electric power transmission route PL2 and attachable/detachable from each other. The potential output terminal 121Pb (first electric power connecting portion), the high potential output terminal 121P (second electric power connecting portion), the terminal 121ab (third electric power connecting portion) and the terminal 121a (fourth electric power connecting portion) are an example of the electric power connecting portion. The electric power connecting portion may be a attachable/detachable connector or coupler (terminal), or alternatively, a cable connecting portion to which a cable is fixed.

The high potential output terminal 121P (second electric power connecting portion) and the terminal 121a (fourth electric power connecting portion) are provided integrally. For example, the high potential output terminal 121P (second electric power connecting portion) and the terminal 121a (fourth electric power connecting portion) are provided on a support portion, which is physically integrally formed. The support portion configured to support the high potential output terminal 121P (second electric power connecting portion) and the terminal 121a (fourth electric power connecting portion) is formed physically integrally. Accordingly, two routes can be connected/disconnected by one detachment work.

As described above, the switching controller 1219A of the battery 121 includes the insulating part 1214A and the BMU 1212S. When the insulating part 1214A (signal conversion part) changes the electric power generated on the basis of the output of the secondary battery 147 to a switching signal that switches the output state of the switching controller 1219A, the BMU 1212S controls the bidirectional switch 1213A (connecting/disconnecting part) in response to the detection of the switching signal. The bidirectional switch 1213A may include a plurality of MOSFETs, connecting/disconnecting of which is controlled by the control.

For example, when a switching signal showing output allowance generated by the insulating part 1214Ais not detected, the BMU 1212S controls each of the plurality of MOSFETs to become a disconnection state, and generates a non-started-up state of the battery 121. On the other hand, when the switching signal showing the output allowance is detected, the BMU 1212S controls each of the plurality of MOSFETs to become a conduction state and generates a started-up state of the battery 121. Further, the electric power generated on the basis of the output of the secondary battery 147 (power source part) or the electric power output from the secondary battery 147 may be simply referred to as electric power of the power source part. In this way, the BMU 1212S can control the state of the battery 121 by controlling the bidirectional switch 1213A on the basis of the electric power of the secondary battery 147.

The motorcycle 1A (power device) includes a PDU 130 and an MCU 140M (first controller) configured to control the operating part such as the PDU 130 or the like, in the PCU 50. The start-up device 140 is disposed at a position physically near the MCU 140M. The position does not merely indicate a close electrical relationship between the start-up device 140 and the PCU 50 including the MCU 140M. For example, as shown in the above-mentioned cross-sectional view of FIG. 2, in the vehicle BD, the position where the PCU 50 and the start-up device 140 are mounted may be disposed at a position sufficiently close even compared to the length of the vehicle BD.

The MCU 140M (first controller) is communicably connected to the BMU 1212S (second controller) configured to control a connecting/disconnecting part 1213 of the battery 121 via a communication route including a CAN-BUS. The battery 121 includes the terminals 121b and 121c among terminals 121bb and 121cb (first communication connecting portions) and terminals 121b and 121c (second communication connecting portions) that are pairs of communication terminals placed in the communication route including the CAN-BUS and provided attachably/detachably from each other.

As described above, in the case of the motorcycle 1A, it can be configured without providing a sub battery with a relatively large capacity. For example, a state switching operation in the switching controller 1219A is performed by the electric power supplied from the secondary battery 147 (power source part) to the switching controller 1219A in the battery 121A. A capacity of the secondary battery 147 may be, for example sufficient to meet the capacity to enable the state switching operation in the switching controller 1219A.

On the other hand, in a case of a comparative example in which a sub battery with a relatively large capacity such as a lead battery or the like is provided, in some cases, the cost of the power device to which the power storage device is applied was increased, it became necessary to secure a place where the sub battery is disposed in the power device, or it became necessary to provide periodic maintenance or the like of the sub battery.

According to the motorcycle 1A of the embodiment, unlike the above-mentioned comparative example, convenience when the battery 121A is used can be further enhanced.

### (First variant of fourth embodiment)

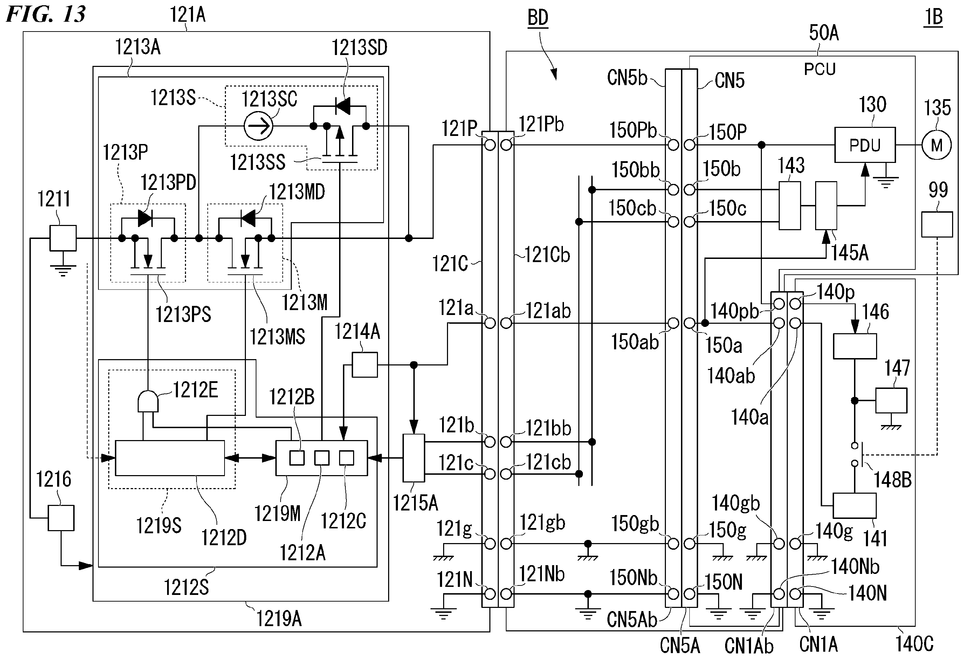

A first variant of the fourth embodiment will be described with reference to FIG. 13. A start-up device 140B shown in the fourth embodiment includes a transceiver 143 and a managing unit 145. In the variant, instead of the above-mentioned, a motorcycle 1B including a transceiver 143 and a managing unit 145 outside of a start-up device 140C will be described.

FIG. 13 is a schematic configuration view of a power source system of the first variant of the fourth embodiment. In FIG. 13, a vehicle body-side circuit including the PCU 50A according to the motorcycle 1B and the start-up device 140C are shown.

The PCU 50A includes a transceiver 143 and a managing unit 145A, instead of the transceiver 143M and the managing unit 145M of the PCU 50. The managing unit 145A is connected to the CAN-BUS via the transceiver 143. The managing unit 145A combines main functions of the managing unit 145 and the managing unit 145M. In other words, the managing unit 145A combines and integrates the functions of the managing unit 145 and the managing unit 145M. Specifically, the managing unit 145A controls the PDU 130 or the like on the basis of the information of the output demand from the throttle (acceleration) sensor 180 (FIG. 4). Further, the managing unit 145A observes the state of the battery 121A and controls activation/inactivation thereof.

The start-up device 140C includes a connector CN1A instead of the connector CN1, and the transceiver 143 and the managing unit 145 are removed in comparison with the start-up device 140B. In comparison with the connector CN1, the terminals (the terminals 140b and 140c) connected to the CAN-BUS are removed from the connector CN1A.

The start-up device 140C is attachably/detachably connected to the PCU 50A. The PCU 50A and the start-up device 140C may be connected via cable or may be connected by a pair of connectors. For example, the PCU 50A includes a connector CN1Ab paired with the connector CN1A. In the terminals provided in the connector CN1Ab, like the connector CN1A, the terminals (the terminals 140bb and 140cb) connected to the CAN-BUS are removed compared to the connector CN1b. The form shown in FIG. 13 is an example of connector connection, but there is no limitation thereto.

According to the variant, while the attachable/detachable unit replaces the start-up device 140B with the start-up device 140C, the same effect as the above-mentioned embodiment is exhibited. Further, the configuration can be simplified through integration as the managing unit 145A.

Showing the above from another point of view, the start-up device 140C and the PCU 50A are constituted by separate units. The DC/DC conversion part 146, the switch 148B, and the activating signal generator 141 are provided in the start-up device 140C of the variant. The transceiver 143 and the managing unit 145A are provided in the PCU 50A of the variant. At least the DC/DC conversion part 146 and the transceiver 143 are mounted on separate units.

### (Second variant of fourth embodiment)

A second variant of the fourth embodiment will be described with reference to the above-mentioned FIG. 12A. The start-up device 140B shown in the fourth embodiment supplies the activating signal ACT to the battery 121A and starts up the battery 121A. After that, the electric power from the battery 121A is supplied to the start-up device 140B. The start-up device 140B is used by the DC/DC conversion part 146 to charge the secondary battery 147. The start-up device 140B of the variant may alternatively not have a function of charging the secondary battery 147 instead of this. Specifically, the step-down type DC/DC conversion part 146 can be removed from the start-up device 140B. In this case, the secondary battery 147 can be charged with the electric power from the charging device 150 using the charging device (power source device) 150 provided outside.

### (Fifth embodiment)

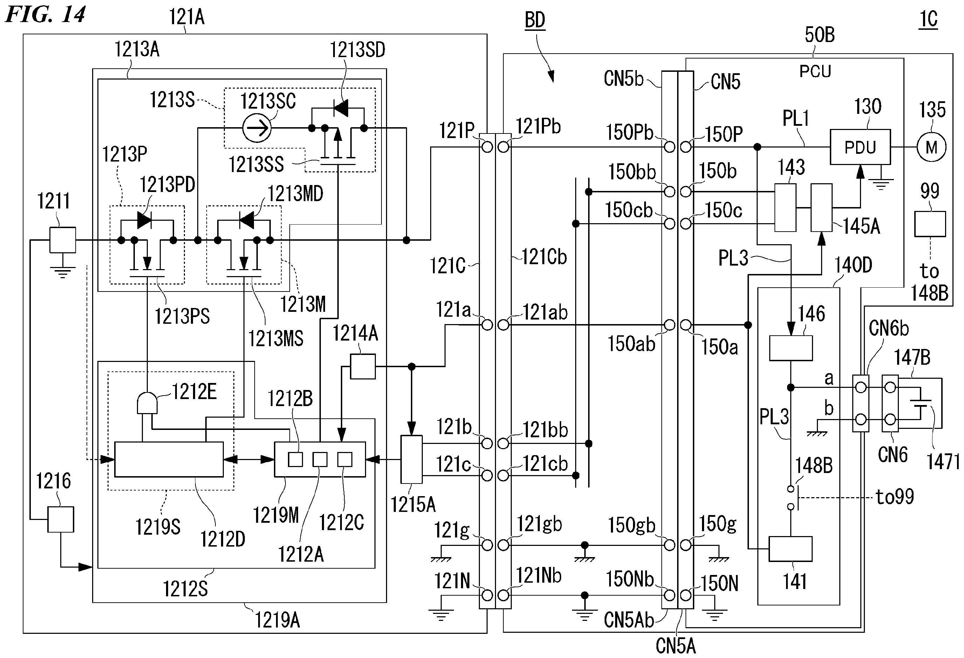

A fifth embodiment will be described with reference to FIG. 14.

The motorcycle 1 shown in the fourth embodiment and the first variant thereof includes the start-up device 140B or the start-up device 140C configured easily attachably/detachably. In the embodiment, instead of this, the motorcycle 1C to which the secondary battery 147 is easily attachably/detachably attached will be described focusing on differences from the configuration of the first variant of the fourth embodiment.

FIG. 14 is a schematic configuration view of a power source system of the fifth embodiment. In FIG. 14, the vehicle body-side circuit including the PCU 50B and the start-up device 140D, which are mounted on the vehicle body BD, are shown.

The start-up device 140D is attached to or mounted on the PCU 50B, unlike the above-mentioned start-up device 140C. Therefore, the start-up device 140D does not include the connector CN1A, unlike the start-up device 140C. The PCU 50B does not include the connector CN1Ab, unlike the PCU 50A. While the connector CN1A and the connector CN1Ab are removed as described above, due to an electrical connection relation between the start-up device 140D and the PCU 50B, there is no difference in that electrical connection is established via the connector CN1A and the connector CN1Ab.

Next, the difference due to replacement of the secondary battery 147 (power source part) with an attachable/detachable type will be described. An attachable/detachable secondary battery is referred to as the secondary battery 147B.

The start-up device 140D does not include the secondary battery 147 (power source part), unlike the start-up device 140C. Instead of this, the start-up device 140C includes a connecting portion CN6b to connect the secondary battery 147B. The terminal a of the connecting portion CN6b is connected to the third electric power transmission route PL3 that connects the DC/DC conversion part 146 and the activating signal generator 141, and the terminal b of the connecting portion CN6b is connected to a reference potential. A shape and a connection type of the connecting portion CN6b may be determined as appropriate.

The secondary battery 147B is an example of the power source part that replaces the secondary battery 147 (FIG. 5). The secondary battery 147B includes a secondary battery main body 1471. A types and a capacity of the secondary battery main body 1471 of the secondary battery 147B may be determined by the same method as the above-mentioned secondary battery 147.

The secondary battery 147B includes a connecting portion CN6 configured to be electrically connected to the connecting portion CN6b of the start-up device 140C. The connecting portion CN6 may be formed as, for example, a connector. Further, a so-called mobile battery device configured to supply direct current electric power to a portable terminal device may be applied to the secondary battery 147B. The secondary battery 147B may include a charge/discharge control circuit associated therewith, in addition to the secondary battery main body 1471.

### <Start-up sequence>

An example of a typical start-up sequence of the battery 121A using the secondary battery 147B applied to the embodiment is shown.

In the case of the embodiment, the occupant performs the following operations with respect to the motorcycle 1C. For example, the secondary battery 147B is not connected to the motorcycle 1C.
(1) The occupant operates the knob 99N of the key switch 99, for example, in a state in which use of the motorcycle 1 is started, and sets the key switch to the lock ("LOCK") or "OFF."
(2) The occupant mounts the charged battery 121A on the motorcycle 1.
(2') The occupant connects the charged secondary battery 147B to the start-up device 140D of the motorcycle 1.
(3') The occupant operates the knob 99N of the key switch 99 and sets the key switch to "ON."
   The start-up device 140D detects the operation of the knob 99N of the key switch 99, and transmits the activating signal ACT to the battery 121A to start activation of the battery 121A, completing the start-up.
(4') The occupant checks activation completion of the battery 121A according to ringing of the chime.

Each sequence of (5) to (7) is the same as the above-mentioned sequence.

The secondary battery 147B is charged in a state connected to the start-up device 140D of the motorcycle 1C. After the activation completion of the battery 121A, the secondary battery 147B can also be removed from the start-up device 140D of the motorcycle 1.

According to the above-mentioned embodiment, the secondary battery 147B is a power source part provided outside of the battery 121A and electrically connectable to the switching controller 1219A. Such a secondary battery 147B is an example of the start-up device. While the range of the attachment/detachment configuration as described above is different from the above-mentioned embodiment, the same effect as the above-mentioned embodiment is exhibited.

Further, as described above, the secondary battery 147B has a first external connecting portion to which a power source outside of the secondary battery 147B is connected. The terminals a and b of the connecting portion CN6b of the embodiment is an example of the first external connecting portion. The terminals a and b of the connecting portion CN6 connected to the secondary battery main body 1471 of the secondary battery 147B are electrically connected to the connecting portion CN6b.

The secondary battery 147B is electrically connected to the first electric power transmission route PL1 via the third electric power transmission route PL3. The third electric power transmission route PL3 is an example of the electric power transmission route. The third electric power transmission route PL3 is connected to the terminal a of the connecting portion CN6b.

### (Sixth embodiment)

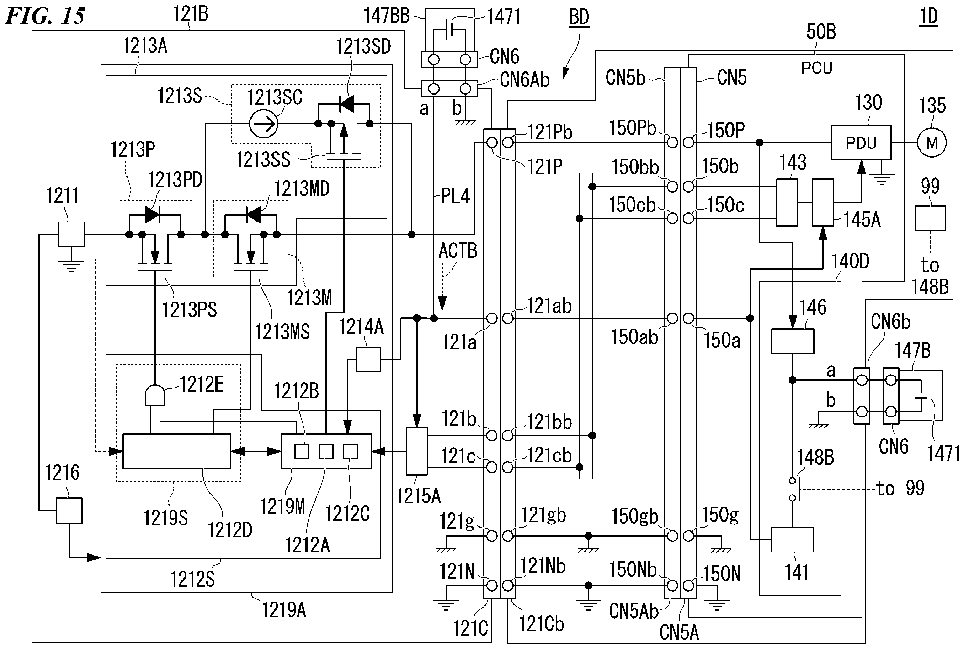

A sixth embodiment will be described with reference to FIG. 15.

In the motorcycle 1C shown in the fifth embodiment, the secondary battery 147B configured easily attachably/detachably is connected to the connecting portion CN6b of the start-up device 140C. In the embodiment, instead of this, a motorcycle 1D using the secondary battery 147BB configured to be attachably/detachably connected to the battery 121B will be described.

FIG. 15 is a schematic configuration view of a power source system of the sixth embodiment.

The battery 121B further includes a connecting portion CN6Ab, unlike the battery 121A.

The terminal a of the connecting portion CN6Ab is electrically connected to the terminal 121a of the connecting connector 121C in which the activating signal ACT is electrically received in the connector 121C. The terminal b of the connecting portion CN6Ab is connected to the terminal 121g of the connecting connector 121C that is a reference potential on the side of an interface with the PCU 50B in the battery 121B.

According to the embodiment, the battery 121B configured in this way can receive the activating signal ACTB from the secondary battery 147BB via the connecting portion CN6Ab, in addition to reception of the activating signal ACT via the connector 121C. In this way, the battery 121B includes connecting terminals configured to receive activating signals of two systems of the activating signal ACT and the activating signal ACTB, respectively. Accordingly, the connecting terminal that receives the activating signal can be made redundant. In this case, mounting of the secondary battery 147B may be both of mounting on the connecting portion CN6b and mounting on the connecting portion CN6Ab, or may be any one mounting.

Further, the high potential output terminal 121P (second electric power connecting portion) and the connecting portion CN6Ab (fourth electric power connecting portion) of the connector 121C are provided independently. With this configuration, even when the high potential output terminal 121P is mounted on the high potential output terminal 121Pb, attachment/detachment of the connecting portion CN6Ab (fourth electric power connecting portion) and the connecting portion CN6 (third connecting portion) is performed.

### (First variant of sixth embodiment)

A first variant of the sixth embodiment will be described with reference to the above-mentioned FIG. 14.

The battery 121B of the sixth embodiment includes connecting terminals configured to receive activating signals of two systems of the activating signal ACT and the activating signal ACTB, respectively. In the case shown in the variant, the route that receives the activating signal ACTB is different from the previous embodiments. Hereinafter, this will be described.

The above-mentioned battery 121A (FIG. 14) receives the activating signal ACT using the terminal 121a of the connector CN1. In addition, a terminal 121d (not shown) may be added to the connector CN1 and the activating signal ACTB may be received using the terminal.

The battery 121B has the second external connecting portion (CN6b) to which a power source outside of the battery 121A is connected, and the fourth electric power transmission route (PL4) configured to electrically connect the switching controller 1219A and the second external connecting portion (CN6b). Accordingly, the fourth electric power transmission route (PL4) is provided parallel to the second electric power transmission route. The second external connecting portion (CN6b) is provided to be connected to a secondary battery 147BB (start-up device).

Further, in the battery 121Ain this case, the terminal 121a and the terminal 121d of the connector CN1 may be short-circuited therein.

According to the variant, the battery 121A can receive the activating signal (ACT) that is redundant from the connector CN1.

### (Second variant of sixth embodiment)

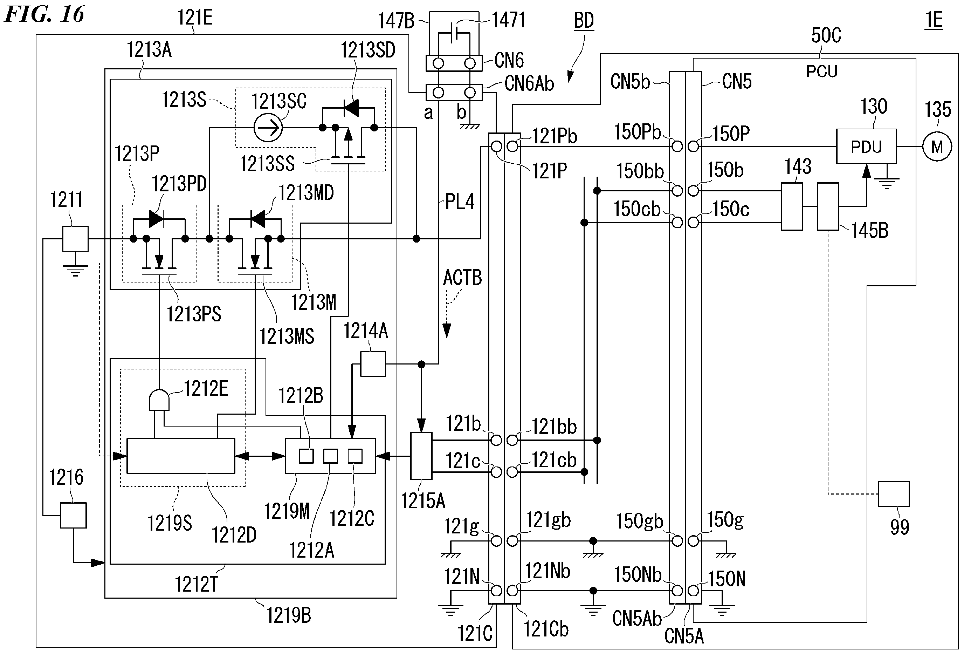

A second variant of the sixth embodiment will be described with reference to FIG. 16.

The battery 121B of the sixth embodiment includes connecting terminals configured to receive activating signals of two systems of the activating signal ACT and the activating signal ACTB, respectively. The example shown in the variant receives the activating signal ACTB. Hereinafter, this will be described.

FIG. 16 is a schematic configuration view of a power source system of the second variant of the sixth embodiment. In FIG. 16, the battery 121E and the vehicle body-side circuit including the PCU 50C mounted on the vehicle body BD are shown.

The PCU 50C of the variant is distinguished from the above-mentioned PCU 50B in that the start-up device 140D is not provided, and the managing unit 145B is provided instead of the managing unit 145A.

In the managing unit 145B, the information showing the state of the key switch 99 is not used for the control of the switch 1213 S. The managing unit 145B is different from the managing unit 145A in this respect. When it is detected that the key switch 99 is turned ON, the managing unit 145B notifies the BMU 1212T of the battery 121E of this through communication via the CAN-BUS.

Like the battery 121B of the embodiment, the battery 121E of the variant can receive the activating signal ACTB from the secondary battery 147BB via the connecting portion CN6Ab. However, the battery 121E does not include a route that receives the activating signal ACT. In addition, the battery 121E includes the switching controller 1219B, instead of the switching controller 1219A. The switching controller 1219B includes the BMU 1212T, instead of the BMU 1212S of the switching controller 1219A.

When the secondary battery 147BB is mounted on the connecting portion CN6Ab, the BMU 1212T receives the activating signal ACTB according to this. The BMU 1212T further receives a notification that the key switch 99 is turned ON via the managing unit 145B and the CAN-BUS. The BMU 1212T activates the battery 121E when the notification that the key switch 99 is turned ON is received in the duration in which the activating signal ACTB is received.

In this way, when the PCU 50C that does not output the activating signal ACT is used, the secondary battery 147BB may be used. Accordingly, the battery 121E can receive the activating signal ACTB from the secondary battery 147BB.

Further, the BMU 1212T of the battery 121E detects that the key switch 99 is turned ON through communication. Accordingly, in a stage in which the secondary battery 147BB is simply connected, the BMU 1212T suppresses activation of the battery 121E. After that, in a stage in which it is detected that the key switch 99 is turned ON, the BMU 1212T starts activation. Accordingly, the battery 121E will no long inadvertently output the electric power.

According to the variant, the battery 121E can be activated using the PCU 50C and the secondary battery 147BB.

The battery 121E has a second external connecting portion (CN6b) to which a power source outside of the battery 121Ais connected, and a fourth electric power transmission route (PL4) configured to electrically connect a switching controller 1212S and the second external connecting portion (CN6b). Accordingly, the fourth electric power transmission route (PL4) is provided parallel to the second electric power transmission route. The second external connecting portion (CN6b) is provided to be connectable to the secondary battery 147BB (start-up device).

### (Seventh embodiment)

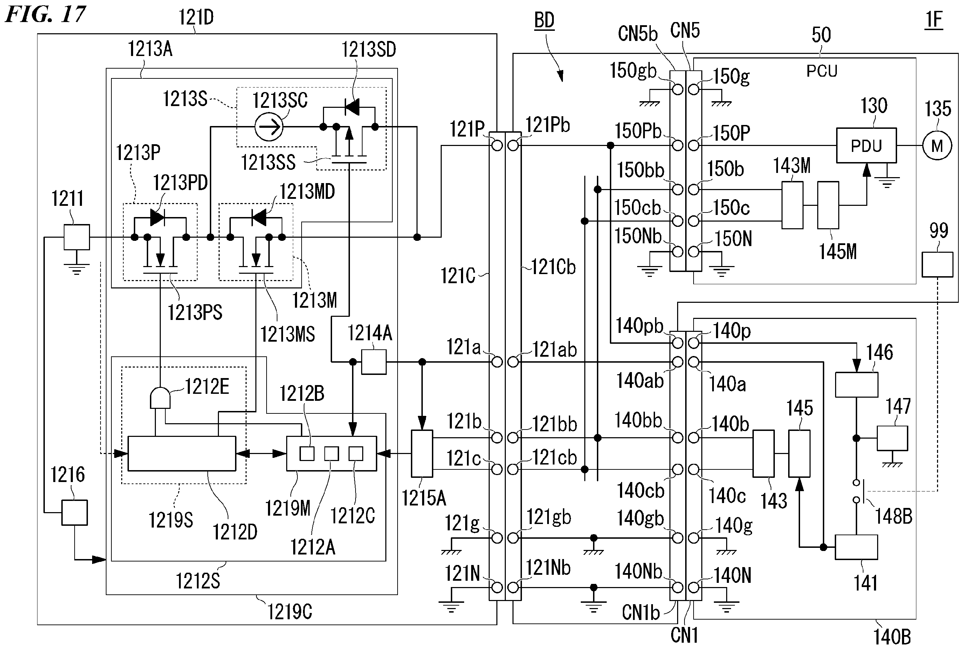

A seventh embodiment will be described with reference to FIG. 17.

In the battery 121A of the motorcycle 1 shown in the fourth embodiment, the activating signal ACT is detected by the switching controller 1219M in the switching controller 1219A, and the switch 1213S is shifted to a conduction state. On the other hand, in the embodiment, a case in which the activating signal ACT is directly used for a state shift of the switch 1213S will be described focusing on differences from the configuration of the fourth embodiment.

FIG. 17 is a schematic configuration view of a power source system of the seventh embodiment. In FIG. 17, the battery 121D, the vehicle body-side circuit including the PCU 50, and the start-up device 140B are shown. The vehicle body-side circuit including the PCU 50, and the start-up device 140B are mounted on the vehicle body BD.

The battery 121D is distinguished from the battery 121Ain that the signal supplied to the gate of the switch 1213S is the activating signal ACT converted by the insulating part 1214. The state of the switch 1213S is determined by the state of the activating signal ACT. When the activating signal ACT is significant, the switch 1213 S is in a conduction state. When the activating signal ACT disappears, the switch 1213 S is in a disconnection state.

As described above, in comparison with the configuration of the fourth embodiment, while a difference occurs in the duration in which the switch 1213 S is in the conduction state, the state of the switch 1213 S can be determined by the state of the activating signal ACT.

### (Eighth embodiment)

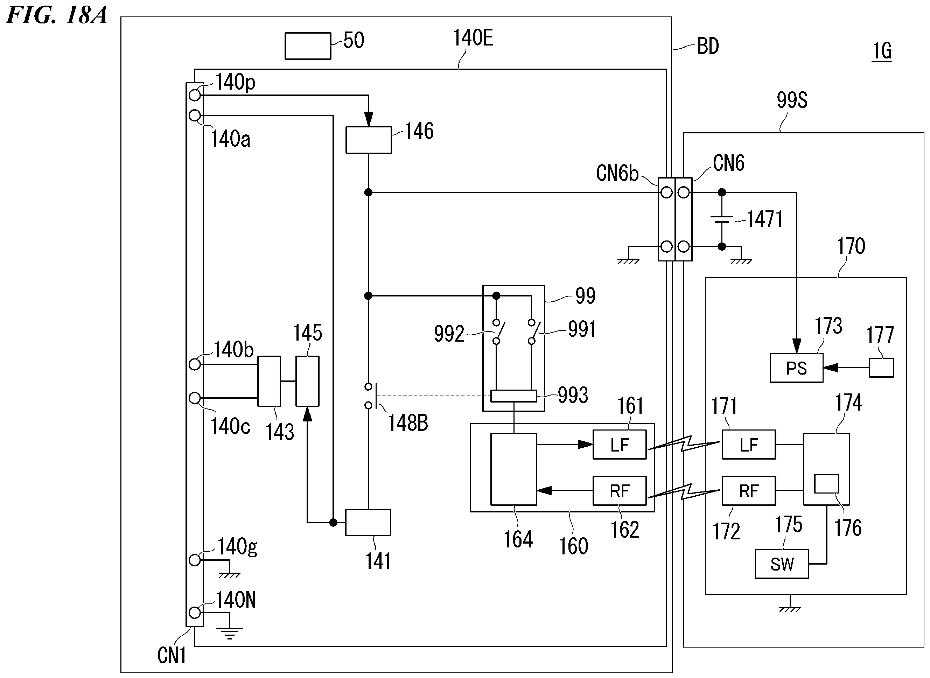

An eighth embodiment will be described with reference to FIG. 18A to FIG. 20.

The case in which the key switch 99 disposed in the vehicle BD is used for a start-up operation of the battery 121A of the motorcycle 1 shown in the fourth embodiment has been described. On the other hand, in the embodiment, a motorcycle 1G using a remote key 99S for a start-up operation of the battery 121A will be described focusing on differences from the configuration of the fourth embodiment.

FIG. 18A is a schematic configuration view of a start-up device of the eighth embodiment. In FIG. 18A, in addition to the start-up device 140E, the remote key 99S for a remote operation used with the motorcycle 1G is shown. FIG. 18B is a front view of the key switch 99 according to FIG. 18A.

The start-up device 140E replaces the above-mentioned start-up device 140 of FIG. 12A. The start-up device 140E is mounted on the vehicle body BD together with the above-mentioned battery 121A shown in FIG. 12A and the vehicle body-side circuit including the PCU 50.

The start-up device 140E and the remote key 99S shown in FIG. 18A contain an electronic key system for a vehicle. A basic configuration of the electronic key system for a vehicle contains, for example, an in-vehicle device 160 and a portable machine 170. The in-vehicle device 160 is a vehicle-side control device mounted on the vehicle BD. The portable machine 170 is carried (possessed) by a user/operator such as an occupant or the like in the vehicle BD, and communicates with the in-vehicle device 160 wirelessly.

The remote key 99S includes an IC chip that realizes main functions of the portable machine 170. The remote key 99S has a card key type and a conventional key type. As the remote key 99S of the embodiment, a card key type that allows the user to use the battery 121E while possessing it in a pocket or the like is exemplified. There is no limitation thereto.

The remote key 99S further includes, for example, the portable machine 170 and a switch 175, unlike the secondary battery 147.

The portable machine 170 includes, for example, an LF reception circuit 171, an RF transmission circuit 172, a power source part 173 (PS), and a control unit 174. The LF reception circuit 171 and the RF transmission circuit 172 include antennae. The LF reception circuit 171 receives, for example, a request signal Sr that is an LF signal of 125 [kHz]. The RF transmission circuit 172 transmits, for example, a response signal Sa that is an RF signal of 315 [MHz]. For example, the power source part 173 receives the electric power from the secondary battery main body 1471, and supplies the electric power to each part in the remote key 99S. On the other hand, the power source part 173 includes a primary battery 177 for the portable machine 170, and may use electric power of the primary battery 177. The control unit 174 is operated to receive the electric power from the power source part 173. The control unit 174 may be in a sleep state in normal times. For example, the control unit 174 starts up according to the operation of the switch 175 and transmits a signal according to the operation of the switch 175. In addition, the control unit 174 starts up according to reception of the request signal Sr transmitted to the portable machine 170 from the in-vehicle device 160, and transmits a response signal for the request signal Sr to the in-vehicle device 160 when the predetermined conditions are satisfied. Further, the control unit 174 can store authentication information for authentication processing in a storage unit 176 provided therein. For example, the control unit 174 is configured to perform comparison processing using the authentication information or transmit the authentication information to the in-vehicle device 160.

A control unit 164 of the in-vehicle device 160 receives electric power. For example, the control unit 164 is in a sleep state in normal times. The control unit 164 starts up in response to the operation of the key switch 99, control of a controller 160 that controls the key switch 99, or reception of the RF signal. The control unit 164 transmits the request signal Sr to the portable machine 170 from the in-vehicle device 160 after that. Further, there is no restriction on disposition of each antenna of the in-vehicle device 160, and each antenna may be disposed at a desired position in the vehicle BD.

Further, the request signal Sr transmitted to the portable machine 170 from the in-vehicle device 160 includes a start-up request signal Sr1 with a relatively small number of data containing a start-up code to start up the portable machine 170, and a challenge code request signal Sr2 with a relatively large number of data containing a challenge code to secure security. A configuration and a transmission method of the start-up request signal Sr1 and the challenge code request signal Sr2 may be determined as appropriate with reference to a known method or the like. Further, for example, the in-vehicle device 160 may acquire an ID transmitted from the portable machine 170 in the sequence, compare an authentication ID provided therein with the acquired ID, and verify whether the portable machine 170 is authenticated, i.e., validity of the remote key 99S.

As shown in FIG. 18B, the key switch 99 has the knob 99N that is a knob thereof. For example, a knob pushing detection switch 991, a knob rotation detection switch 992, and a key switch controller 993 are provided in the key switch 99 to detect a knob pushing operation and a rotation operation of the knob 99N.

The knob 99N is provided to be pushed into a LOCK position by a user such as a driver or the like, and rotate from the LOCK position to an OFF position or from the OFF position to an ON position. The knob 99N can rotate in sequence of a lock (LOCK) position where a knob lock is set to limit an operation of the knob 99N, an off (OFF) position during start preparation or stoppage, which is a position where the knob 99N is rotatable when the knob 99N is pushed (PUSH), authentication between the portable machine 170 and the in-vehicle device 160 succeeds, and the knob lock is released, and an on (ON) position where the battery 121A starts up and then the vehicle is driven. At the ON position, the electric power is supplied from the battery 121 to the PCU 50 or the like, and the vehicle can travel.

Processing of the battery 121 upon start-up of the embodiment will be described with reference to FIG. 19. FIG. 19 is a flowchart showing a sequence of the processing of the battery 121 upon start-up of the embodiment.

The key switch controller 993 performs initialization processing (step SU10).

The key switch controller 993 identifies whether a "PUSH" operation of the knob 99N is performed (step SU20). According to the determination in step SU20, when the "PUSH" operation of the knob 99N is not identified (step SU20: No), the key switch controller 993 advances processing of step SU40. According to the determination in step SU20, when the "PUSH" operation of the knob 99N is identified (step SU20: Yes), the key switch controller 993 controls the in-vehicle device 160 and performs authentication processing of the portable machine 170 on the in-vehicle device 160 (step SU30).

After determination in step SU20 or after termination of the processing in step SU30, the key switch controller 993 identifies whether the authentication is possible (step SU40). According to the determination in step SU40, in the case of the authentication success (step SU40: Yes), the key switch controller 993 performs start-up processing (processing shifted to activation state) of the battery 121 (step SU50). After termination of the start-up processing in step SU50, the key switch controller 993 observes an operation situation during a normal operation (step SU60).

The key switch controller 993 continues observation of the operation situation (step SU70) until the "OFF" operation of the knob 99N is detected, and performs the predetermined processing after abnormality is detected. When the "OFF" operation of the knob 99N is detected, the key switch controller 993 performs breakdown processing (processing shifted to an inactivation state) of the battery 121.

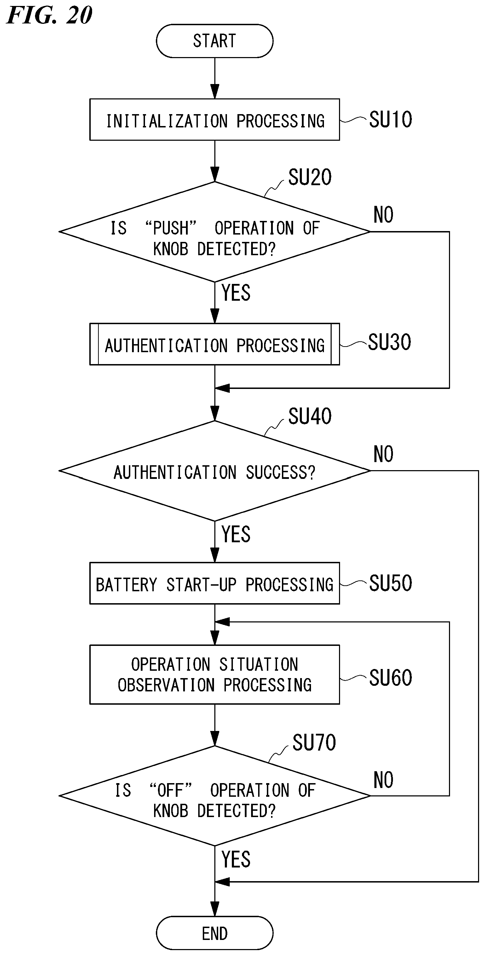

Processing of a portable machine of the remote key 99S of the embodiment will be described with reference to FIG. 20. FIG. 20 is a flowchart showing a sequence of processing of the portable machine of the embodiment. Hereinafter, the portable machine 170 is exemplarily described.

A portable machine reception part 171 receives an LF signal (step SS31).

Next, a portable machine control unit 174 compares an identification No. of the portable machine included in the received signal and an identification No. assigned to a host machine, and determines whether the comparison is successful (step SS32). When it is determined that the comparison is unsuccessful as the comparison results in step SS32 (step SS32: No), the processing is ended.

Meanwhile, when it is determined that the comparison is successful as the comparison results in step SS32 (step SS32: Yes), the portable machine control unit 174 performs answer processing of transmitting a response with respect to the reception signal from a portable machine transmission unit 172, and terminates the processing (step SS34).

According to the embodiment, the remote key 99S (start-up device) is provided to be attachably and detachably attached to the motorcycle 1G.

The remote key 99S is provided to be communicable with the key switch 99 (input part) configured to receive an intention of start-up of the power device by a user of the motorcycle 1G or the in-vehicle device 160 (control unit) configured to control the key switch 99, and provided to supply the electric power of the secondary battery main body 1471 to the outside of the remote key 99S on the basis of input information to the key switch 99.

In the remote key 99S, the opening/closing part (148, 148B) configured to switch whether the electric power of the secondary battery main body 1471 is supplied to the outside of the start-up device is provided in series with the secondary battery main body 1471.

The remote key 99S includes the storage 176 configured to store authentication information provided for authentication related to usage allowance of the motorcycle 1G. The remote key 99S includes the portable machine 170 (second communication part) provided to be communicable with the in-vehicle device 160 (first communication part) of the motorcycle 1G.

The portable machine 170 of the remote key 99S is provided to transmit operation information provided for the operation of the motorcycle 1G or the authentication information. Further, various types of instruction information or the like may be contained in the operation information.

The remote key 99S includes the power source part 173 that is another power source part different from the secondary battery main body 1471. The power source part 173 may receive electric power from the secondary battery main body 1471 or the primary battery 177, and operate the remote key 99S using the electric power.

Further, the remote key 99S may be provided to be attachable and detachable from the battery 121 (power storage device). For this, the above-mentioned sixth embodiment may be referred. In this case, the start-up device 140E may further include the secondary battery 147.

Since the start-up device (140, the secondary battery 147B, 147BB, the remote key 99S) of the embodiment includes the power source part (the secondary battery 147, the secondary battery main body 1471, or the capacitor 147A) electrically connectable to the switching controller in the power storage device (the battery 121), the started-up state in which electric power of the power storage can be output to the outside of the power storage device or in which electric power outside of the power storage device can be input to the power storage and the non-started-up state in which electric power of the power storage cannot be output to the outside of the power storage device or in which electric power outside of the power storage device cannot be input to the power storage can be switched by the switching controller (1219, 1219S, 1219T), and thereby convenience of the motorcycle 1 or the like to which the battery 121 is applied can be further increased.

Further, the start-up device 140, the battery 121, the PCU 50, and the remote key 99S of the motorcycle 1 according to the embodiment include a computer system. For example, the start-up device 140, the MCU 140M and the BMU 1212 may perform the above-mentioned various types of processing by recording a program for realizing the processing on a computer-readable recording medium and reading and executing the program recorded on the recording medium using the computer system. Further, the "computer system" disclosed herein may include an OS or hardware such as peripheral equipment or the like. In addition, the "computer-readable recording medium" is referred to as a writable non-volatile memory such as a flexible disk, a magneto-optic disk, a ROM, a flash memory, or the like, a portable medium such as a CD-ROM or the like, or a storage device such as a hard disk installed in the computer system.

Further, the "computer-readable recording medium" includes a medium holding a program for a constant time like a volatile memory (for example, a dynamic random access memory (DRAM)) in the computer system that is a server or a client when the program is transmitted via a network such as the Internet or the like, or a communication line such as a telephone line or the like. In addition, the program may be transmitted from the computer system in which the program is stored in the storage device or the like to another computer system via a transmission medium or by a transmission wave in a transmission medium. Here, the "transmission medium" that transmits the program refers to a medium having a function of transmitting information like a network (communication network) such as the Internet or the like, or a communication line (communication wire) such as a telephone line or the like. In addition, the program may be provided to realize some of the above-mentioned functions. Further, it may be a so-called differential file (differential program) that can realize the above-mentioned functions in combination with the program already recorded in the computer system.

Hereinabove, while the modes for carrying out the present invention has been described using the embodiments, the present invention is not limited to such embodiments, and various modifications and substitutions may be made without departing from the scope of the present invention.

Further, in the process of controlling the bidirectional switch 1213 according to the operation of the moment type external start-up switch 148E, while the case including the processing of the managing unit 145 has been described, this may be realized by hardware.

In addition, the electric power storage object shown in the embodiment is an example of storing electric power (electric energy) by changing the form of energy. The power storage device has an electrode that converts a form between electric power and chemical energy. The power storage device may be, for example, a so-called storage cell (battery) using oxidoreduction of an electrode.

While the example of sharing the terminal (electrode) that connects the secondary battery 147B to the motorcycle 1A (1C) or the battery 121B (121C) in both charge and discharge forms of usage of the secondary battery 147B has been described, there is no restriction on providing the secondary battery 147B separately for charge and discharge and it can be selected as appropriate. When the battery 121B (121C) is activated, at least the discharge terminal of the secondary battery 147B may be used for connection to the motorcycle 1A (1C) or the battery 121B (121C).

### [Reference Signs List]

1, 1A, 1B, 1C, 1D, 1E, 1F, 1G Motorcycle (moving body, power device)
26 Seat (lid portion)
50, 50A, 50B, 50C PCU
80 Accommodating box (second accommodating portion)
99 Key switch (input part)
99S Remote key
100 Control system
110 Electric circuit
115 Contactor
120 Accommodating portion (first accommodating portion)
121, 121A, 121B, 121D, 121E Battery (power storage device, storage object)
120C Battery case
130 PDU (load, electric power conversion part)
135 Electric motor
140, 140A, 140B Start-up device
140M MCU
141 Activating signal generator
142 Notifying part
143 CAN-BUS transceiver (transceiver)
144 Discharging part
145, 145A Managing unit
146 DC/DC conversion part (voltage conversion part)
147, 147B, 147BB Secondary battery (power source part)
147A Capacitor (power source part)
148 Switch (opening/closing part)
148E External start-up switch (input part)
149 DC/DC conversion part
180 Throttle (acceleration) sensor
1211 Battery main body (power storage)
1212, 1212S, 1212T BMU (connecting/disconnecting controller)
1213 Bidirectional switch (connecting/disconnecting part)
1213M Switch (first connecting/disconnecting part)
1213S Switch (second connecting/disconnecting part)
1213P Switch (third connecting/disconnecting part)
1214 Insulating part
1215 CAN-BUS transceiver (communication IF portion)
1217 Activating line (activating signal transmission line)
1218 CAN communication line (signal transmission line)
1219, 1219S, 1219M Switching controller

## Claims

1. A start-up device of a power storage device having a power storage,
the power storage device comprising a switching controller configured to switch between a started-up state in which electric power of the power storage is able to be output to outside of the power storage device or in which electric power outside of the power storage device is able to be input to the power storage and a non-started-up state in which electric power of the power storage is unable to be output to the outside of the power storage device or in which electric power outside of the power storage device is unable to be input to the power storage, and
the start-up device comprising a power source part provided outside of the power storage device and electrically connectable to the switching controller.

2. The start-up device according to claim 1, wherein the power storage device is provided to be attachable to or detachable from a power device including an operating part,
the power storage of the power storage device and the operating part are electrically connected via a first electric power transmission route, and
the power source part and the switching controller are electrically connected via a second electric power transmission route.

3. The start-up device according to claim 2, wherein the start-up device has a first external connecting portion to which a power source outside of the start-up device is connected, and
the power source part and the first external connecting portion are electrically connected to each other.

4. The start-up device according to claim 3, wherein the power source part is electrically connected to the first electric power transmission route via a third electric power transmission route, and the third electric power transmission route is connected to the first external connecting portion.

5. The start-up device according to claim 4, wherein the power device or the start-up device includes an electric power conversion part on the third electric power transmission route.

6. The start-up device according to any one of claims 2 to 5,
wherein, among a pair of a first electric power connecting portion and a second electric power connecting portion that are placed in the first electric power transmission route and that are provided to be attachable to and detachable from each other, the power storage device includes the second electric power connecting portion; and
among a pair of a third electric power connecting portion and a fourth electric power connecting portion that are placed in the second electric power transmission route and that are provided to be attachable to and detachable from each other, the power storage device includes the fourth electric power connecting portion.

7. The start-up device according to claim 6, wherein the second electric power connecting portion and the fourth electric power connecting portion are provided integrally.

8. The start-up device according to claim 6, wherein the second electric power connecting portion and the fourth electric power connecting portion are provided independently.

9. The start-up device according to any one of claims 2 to 8, wherein the power storage device has:
a second external connecting portion to which a power source outside of the power storage device is connected; and
a fourth electric power transmission route configured to electrically connect the switching controller and the second external connecting portion, and
the fourth electric power transmission route is provided parallel to the second electric power transmission route.

10. The start-up device according to claim 9, wherein the second external connecting portion is provided to be connectable to the start-up device.

11. The start-up device according to any one of claims 2 to 10, wherein the power device includes a first controller configured to control the operating part, and
the start-up device is disposed at a position near the first controller.

12. The start-up device according to claim 11, wherein the first controller is connected to be communicable with a second controller via a communication route, the second controller being configured to control a connecting/disconnecting part of the power storage device via a communication route, and
among a pair of a first communication connecting portion and a second communication connecting portion that are placed in the communication route and that are attachable to and detachable from each other, the power storage device includes the second communication connecting portion.

13. The start-up device according to claim 12, wherein, among a pair of a third electric power connecting portion and a fourth electric power connecting portion that are placed in the second electric power transmission route and that are attachable to and detachable from each other, the power storage device includes the fourth electric power connecting portion, and
the second communication connecting portion and the fourth electric power connecting portion are provided integrally.

14. The start-up device according to any one of claims 2 to 13, wherein the start-up device is provided to be attachable to and detachable from the power device.

15. The start-up device according to claim 14, wherein the start-up device is provided to be communicable with an input part configured to receive an intention of start-up of the power device by a user of the power device or communicable with a controller configured to control the input part, and
the start-up device is provided to supply electric power of the power source part to the outside of the start-up device on the basis of input information to the input part.

16. The start-up device according to claim 15, wherein the start-up device is provided with an opening/closing part which is in series with the power source part, the opening/closing part being configured to switch whether electric power of the power source part is supplied to the outside of the start-up device.

17. The start-up device according to claim 15 or 16, wherein the start-up device includes a storage configured to store authentication information provided for authentication related to usage allowance of the power device.

18. The start-up device according to claim 17, wherein the start-up device includes a second communication part provided to be communicable with a first communication part of the power device.

19. The start-up device according to claim 18, wherein the second communication part is provided to transmit operation information provided for an operation of the power device or the authentication information.

20. The start-up device according to any one of claims 17 to 19, wherein the start-up device includes another power source part different from the power source part.

21. The start-up device according to any one of claims 1 to 20, wherein the power storage device includes a second electric power terminal that is an electric power terminal provided to be attachable to and detachable from a first electric power terminal that is an electric power terminal of a power device provided to be attachable to and detachable from the power storage device, and
the switching controller includes a connecting/disconnecting part that is provided on a first electric power transmission route and that is configured to connect the power storage and the second electric power terminal.

22. The start-up device according to claim 21, wherein the connecting/disconnecting part includes a first connecting/disconnecting part and a second connecting/disconnecting part provided parallel to the first connecting/disconnecting part.

23. The start-up device according to claim 22 or 23, wherein the switching controller includes:
a signal conversion part configured to change electric power of the power source part to a switching signal that switches an output state of the switching controller; and
a connecting/disconnecting controller configured to control the connecting/disconnecting part according to detection of the switching signal,
the connecting/disconnecting part includes a plurality of semiconductor switching elements, connecting/disconnecting of which is controlled by the control, and
when the switching signal showing output allowance is not detected, the connecting/disconnecting controller performs control to put each of the plurality of semiconductor switching elements in a disconnection state and generates the non-started-up state of the power storage device, and
when the switching signal showing the output allowance is detected, the connecting/disconnecting controller performs control to put each of the plurality of semiconductor switching elements in a conduction state and generates the started-up state of the power storage device.

24. The start-up device according to any one of claims 21 to 23, wherein the power source part is disposed on the power device including an electric power conversion part configured to convert electric power, and
the electric power conversion part converts electric power from the power storage device that has been started up, or transmits the converted and generated electric power to the power storage device that has been started up.

25. The start-up device according to any one of claims 1 to 24, comprising:
an input terminal to which electric power from the power storage device is input; and
an output terminal configured to output some of electric power output from the power source part.

26. The start-up device according to claim 25, comprising: a voltage conversion part that is disposed on a route from the input terminal to the output terminal and that is configured to supply electric power after converting a voltage of the input terminal to the power source part,
wherein an allowance input voltage allowed with respect to the input terminal is different from an allowance output voltage allowed with respect to the output terminal.

27. The start-up device according to any one of claims 1 to 26, wherein the start-up device is provided to be attachable to and detachable from the power storage device.

28. A power device comprising an operating part configured to charge or discharge a power storage device having a power storage,
wherein the power storage device includes a switching controller configured to switch between a started-up state in which electric power of the power storage is able to be output to outside of the power storage device or in which electric power outside of the power storage device is able to be input to the power storage and a non-started-up state in which electric power of the power storage is unable to be output to the outside of the power storage device or in which electric power outside of the power storage device is unable to be input to the power storage, and
a start-up device configured to start up the power storage device includes a power source part provided outside of the power storage device and electrically connectable to the switching controller.

29. The power device according to claim 28, wherein a first accommodating portion and a second accommodating portion configured to form an accommodating space that has an opening on an upper portion thereof are provided,
the power storage device is accommodated in the first accommodating portion, and
the start-up device is accommodated in the second accommodating portion.

30. A power storage device having a power storage, comprising:
a switching controller configured to switch between a started-up state in which electric power of the power storage is able to be output to outside of the power storage device or in which electric power outside of the power storage device is able to be input to the power storage and a non-started-up state in which electric power of the power storage is unable to be output to the outside of the power storage device or in which electric power outside of the power storage device is unable to be input to the power storage; and
a connecting portion that is provided outside of the power storage device and to which a start-up device having a power source part electrically connectable to the switching controller is connected.
